# EUROPEAN PATENT APPLICATION

(11) **EP 4 465 648 A1**
(43) Date of publication of application: **20.11.2024**
(21) Application number: 23765869.5
(22) Date of filing: 02.03.2023
(51) Int. Cl.: H04N 23/68

(54) **CAMERA MODULE AND ELECTRONIC DEVICE**

(30) Priority: 07.03.2022 CN 202210216789
(71) Applicant: Huawei Technologies Co., Ltd., Shenzhen, Guangdong 518129 (CN)
(72) Inventor: LI, Dengfeng, Shenzhen, Guangdong 518129 (CN); SUN, Zhanli, Shenzhen, Guangdong 518129 (CN); LIU, Hongming, Shenzhen, Guangdong 518129 (CN); DAI, Renjun, Shenzhen, Guangdong 518129 (CN); MIAO, Weiliang, Shenzhen, Guangdong 518129 (CN); LIU, Bin, Shenzhen, Guangdong 518129 (CN); BIAN, Xinxiu, Shenzhen, Guangdong 518129 (CN)
(74) Representative: Maiwald GmbH
(86) International application number: PCT/CN2023/079225
(87) International publication number: WO 2023/169291

(57) **Abstract**

This application relates to the field of electronic device technologies, and provides a camera module and an electronic device, to reduce a volume of the camera module while improving image stabilization performance of the camera module. The camera module includes an optical lens, a module circuit board, a photosensitive chip, and an actuator. The module circuit board is disposed on a light exit side of the optical lens and includes a fastening part, a moving part, and an elastic part. The moving part is elastically connected to the fastening part through the elastic part. The photosensitive chip is disposed on a side that is of the moving part and that faces the optical lens. The actuator includes a fastened clamping jaw, a movable clamping jaw, and a wire. The fastened clamping jaw is fastened to the fastening part, the movable clamping jaw is fastened to the moving part, the wire is connected between the fastened clamping jaw and the movable clamping jaw, and a length of the wire is changeable. The actuator is configured to drive the moving part to move relative to the fastening part when the length of the wire changes.

## Description

### CROSS-REFERENCE TO RELATED APPLICATIONS

This application claims priority to Chinese Patent Application No. 202210216789.9, filed with the China National Intellectual Property Administration on March 7, 2022 and entitled "CAMERA MODULE AND ELECTRONIC DEVICE", which is incorporated herein by reference in its entirety.

### TECHNICAL FIELD

This application relates to the field of electronic device technologies, and in particular, to a camera module and an electronic device.

### BACKGROUND

To improve competitiveness of electronic devices such as mobile phones and tablet computers, a camera module having an image stabilization function has become a standard configuration of current electronic devices. Common image stabilization technologies include lens image stabilization and chip image stabilization. Compared with the conventional lens image stabilization technology, the chip image stabilization technology is more advantageous in a driving force because a weight of a rotor is smaller, and can implement a larger image stabilization angle.

Currently, a driving manner used in a chip image stabilization solution is mainly electromagnetic driving, and a Lorentz force generated between a magnet and a coil after a voice coil motor is energized is used to drive the rotor to move. However, because a driving force that can be provided by the voice coil motor is small, an image stabilization angle of the camera module is limited. To increase the driving force of the voice coil motor, a volume of the magnet and a volume of the coil need to be increased. In this case, an overall volume of the camera module is increased. This is not conducive to implementing a miniaturization design of an electronic device.

### SUMMARY

This application provides a camera module and an electronic device, to reduce a volume of the camera module while improving image stabilization performance of the camera module.

According to a first aspect, this application provides a camera module. The camera module may include an optical lens, a module circuit board, a photosensitive chip, and an actuator. The module circuit board is disposed on a light exit side of the optical lens. The module circuit board may include a fastening part, a moving part, and an elastic part. The moving part may be elastically connected to the fastening part through the elastic part, so that when the elastic part is elastically deformed, the moving part can move relative to the fastening part. The photosensitive chip may be disposed on a side that is of the moving part and that faces the optical lens. The actuator may include a fastened clamping jaw, a movable clamping jaw, and a wire. During specific arrangement, the fastened clamping jaw may be fastened to the fastening part, the movable clamping jaw may be fastened to the moving part, and the wire is separately connected to the fastened clamping jaw and the movable clamping jaw. In addition, a length of the wire is changeable, so that when the length of the wire changes, the actuator can drive the moving part to move relative to the fastening part, and further drive the photosensitive chip disposed on the moving part to move synchronously.

In the foregoing solution, the actuator of the camera module drives, based on a length change of the wire, the moving part to move, and further drives the photosensitive chip to move to implement an image stabilization function. Compared with that in a conventional solution of a voice coil motor, on a premise that the camera module can implement image stabilization at a large angle, a stacking height of the camera module may be effectively reduced, so that an overall volume of the camera module can be reduced. In addition, because there is no magnetic component like a magnet in the actuator, magnetic interference to another component inside an electronic device can be avoided, and use reliability of the electronic device can be improved.

In some possible implementations, the photosensitive chip may be disposed on a surface of a side that is of the moving part and that faces the optical lens. Alternatively, a mounting groove may be disposed on the moving part, and the moving part is disposed in the mounting groove, so that the moving part and the photosensitive chip overlap in a region in a thickness direction. This helps reduce a stacking height of the camera module. For example, the photosensitive chip and the moving part may be electrically connected to the fastening part through a wire bonding process.

In some possible implementations, the elastic part may have electrical conductivity. Therefore, the elastic part can not only mechanically connect the moving part to the fastening part, but also transmit a signal between the moving part and the fastening part.

In some possible implementations, the fastening part, the moving part, and the elastic part may have a same laminated structure. In this case, the fastening part, the moving part, and the elastic part may be integrally formed from an entire circuit board through a cutting process. This helps simplify a manufacturing and assembling process of the camera module.

In some possible implementations, the camera module may further include a flexible printed circuit board, a connector configured to connect to an external component may be disposed on the flexible printed circuit board, and the flexible printed circuit board and the module circuit board may be a rigid-flex printed circuit board of an integrated structure. According to this design, an assembly process of the camera module can be simplified, and a complex process and a reliability problem caused by soldering can be avoided.

When each part of the module circuit board is specifically arranged, the fastening part may be of a frame-shaped structure, the moving part may be disposed inside a frame-shaped inner side of the fastening part, the elastic part is arranged in the gap between the fastening part and the moving part, and the elastic part may be annularly disposed around the moving part. This improves uniformity force exertion of the moving part.

In some possible implementations, the fastening part may have a first protrusion and a second protrusion that are disposed toward an inner side of the moving part, and the moving part may have a third protrusion and a fourth protrusion that are disposed toward an outer side of the fastening part. The first protrusion, the third protrusion, the second protrusion, and the fourth protrusion are sequentially arranged in a peripheral direction of the moving part. The elastic part may include four groups of elastic components, and the four groups of elastic components may be respectively connected between the first protrusion and the third protrusion, between the third protrusion and the second protrusion, between the second protrusion and the fourth protrusion, and between the fourth protrusion and the first protrusion. Thus, the four groups of elastic components are used to establish a stable elastic connection relationship between the moving part and the fastening part.

During specific arrangement, the elastic components each may include at least one elastic arm, and the at least one elastic arm is disposed in parallel and at an interval. In this case, two ends of each elastic arm may be respectively connected to two corresponding protrusions on the fastening part and the moving part, to ensure a reliable connection between the fastening part and the moving part, and improve the overall elastic performance of the elastic component.

In a thickness direction of the module circuit board, the elastic arm may include a substrate and at least one layer of subboard disposed on the substrate. The substrate may be a rigid material, and a conductive line may be disposed on the subboard. The laminated structure is adopted, so that the elastic arm can have a large elastic coefficient in the thickness direction. In this way, the moving part and the photosensitive chip disposed on the moving part can be reliably supported, and the elastic arm can have a good elastic recovery capability. Therefore, after an external force causing deformation of the elastic arm disappears, the elastic arm can restore an initial state quickly, and a problem of posture difference of the moving part can be effectively overcome.

For example, a material of the substrate may be specifically titanium copper.

For example, there may be three layers of subboards in the elastic arm. In a direction away from the substrate, a first layer of subboard may be configured to provide a power cable and a signal cable, a second layer of subboard may be configured to provide a shield layer, and a third layer of subboards may be configured to provide a signal cable.

In some possible implementations, there may be two fastened clamping jaws and two movable clamping jaws: a first fastened clamping jaw, a second fastened clamping jaw, a first movable clamping jaws, and a second movable clamping jaws. The first fastened clamping jaw, the first movable clamping jaw, the second fastened clamping jaw and the second movable clamping jaw are sequentially arranged in the peripheral direction of the moving part. In this case, there may be four wires: a first wire, a second wire, a third wire, and a fourth wire. Two ends of the first wire are respectively connected to the first fastened clamping jaw and the first movable clamping jaw. Two ends of the second wire are respectively connected to the first fastened clamping jaw and the second movable clamping jaw. Two ends of the third wire are respectively connected to the second movable clamping jaw and the second fastened clamping jaw. Two ends of the fourth wire are respectively connected to the second fastened clamping jaw and the first movable clamping jaw. The first wire, the second wire, the third wire and the fourth wire may be sequentially connected to form a ring-shaped structure through the two movable clamping jaw and the two fastened clamping jaws. The moving part can be moved or rotated relative to the fastening part by controlling telescoping of each wire. Therefore, the photosensitive chip is driven to move synchronously, to implement an optical image stabilization function of the camera module.

In some possible implementations, the first fastened clamping jaw may include a first jaw part and a second jaw part, the first jaw part is insulated from the second jaw part, the first jaw part may be configured to connect to the first wire, and the second jaw part may be configured to connect to the second wire. The second fastened clamping jaw may include a third jaw part and a fourth jaw part, the third jaw part is insulated from the fourth jaw part, the third jaw part may be configured to connect to the third wire, and the fourth jaw part may be configured to connect to the fourth wire. Through this arrangement, separate control of telescopic states of the four wires can be implemented.

In some other possible implementations, the first movable clamping jaw may include a fifth jaw part and a sixth jaw part, the fifth jaw part is insulated from the sixth jaw part, the fifth jaw part may be configured to connect to the first wire, and the sixth jaw part may be configured to connect to the fourth wire. The second movable clamping jaw may include a seventh jaw part and an eighth jaw part, the seventh jaw part is insulated from the eighth jaw part, the seventh jaw part may be configured to connect to the second wire, and the eighth jaw part may be configured to connect to the third wire. Similar to the foregoing solution, separate control of telescopic states of the four wires can be implemented by using this solution.

In some possible implementations, the first movable clamping jaw may be of a strip structure, an orthographic projection of a first end of the first movable clamping jaw on the module circuit board falls on the fastening part, the first end of the first movable clamping jaw may be configured to connect to the first wire and the fourth wire, and a second end of the first movable clamping jaw may be configured to be fastened to the moving part.

Similarly, the second movable clamping jaw may also be of a strip structure, an orthographic projection of a first end of the second movable clamping jaw on the module circuit board falls on the fastening part, the first end of the second movable clamping jaw may be configured to connect to the second wire and the third wire, and a second end of the second movable clamping jaw may be configured to be fastened to the moving part.

In some possible implementations, the fastening part may be provided with a first hole, and the first hole is disposed close to the first fastened clamping jaw. At least a part of an orthographic projection that is of an extension line at an end of the first wire connected to the first fastened clamping jaw and that is on the module circuit board may fall on the first hole. At least a part of an orthographic projection that is of an extension line at an end of the second wire connected to the first fastened clamping jaw and that is on the module circuit board may also fall on the first hole. When a cutting device is used to cut and adjust lengths of the first wire and the second wire, the first hole may avoid the cutting device, to avoid damage caused by the cutting device to the module circuit board.

Similarly, the fastening part may be further provided with a second hole, a third hole, and a fourth hole. The second hole may be disposed close to the second fastened clamping jaw, and at least a part of an orthographic projection that is of an extension line of an end at which the third wire and the fourth wire are connected to the second fastened clamping jaw and that is on the module circuit board falls on the second hole. The third hole may be disposed close to the first movable clamping jaw, and at least a part of an orthographic projection that is of an extension line of an end at which the first wire and the fourth wire are connected to the first movable clamping jaw and that is on the module circuit board falls on the third hole. The fourth hole may be disposed close to the second movable clamping jaw, and at least a part of an orthographic projection that is of an extension line of an end at which the second wire and the third wire are connected to the second movable clamping jaw and that is on the module circuit board falls on the fourth hole.

In some possible implementations, the first end of the first movable clamping jaw may be connected to the fastening part by using a damping glue, and the first end of the second movable clamping jaw may also be connected to the fastening part by using a damping glue. The damping glue can provide a damping force for movement of the first movable clamping jaw and second movable clamping jaw, and the damping force can be further transmitted to the moving part, so that the moving part can move smoothly.

In some possible implementations, the first wire and the third wire are disposed in parallel and extend in a first direction, and the second wire and the fourth wire are disposed in parallel and extend in a second direction. The first direction and the second direction are set at an included angle. In this case, the actuator may drive the moving part to move in the first direction and the second direction.

For example, the first direction and the second direction may be set orthogonally.

In some possible implementations, an annular shielding structure may be disposed on the fastening part, the shielding structure and the wires may be located on a same side of the fastening part, and the shielding structure is located on an inner side of an annular region formed by the four wires. The shielding structure can shield each wire, to avoid the wire from being embedded into a gap between the fastening part and the moving part, and improve working reliability of the actuator.

In some possible implementations, an inner side of the shielding structure may partially overlap with the moving part, and a first gap may exist between the shielding structure and the moving part in a thickness direction of the module circuit board. In this case, the module circuit board may further include a first support pillar, where the first support pillar may be disposed between the shielding structure and the moving part, one end of the first support pillar is fastened to the shielding structure, the other end is disposed in contact with the moving part, and a height of the first support pillar is greater than that of the foregoing first gap. Based on a supporting action of the first support pillar, a vertical section difference is generated between the moving part and the fastening part, and the elastic part is deformed vertically. Therefore, the elastic part applies a pre-pressure to the moving part, and the pre-pressure can make the moving part and an end of the first support pillar always be in close contact. This can reduce a risk of vertical displacement of the moving part, and overcome a problem of posture difference of the moving part.

For example, there may be at least three first support pillars, and these first support pillars may be evenly distributed on sides of the moving part, to improve uniformity force exertion of the moving part.

In some possible implementations, a first arched part may be further disposed at a position that is on the shielding structure and that corresponds to the first movable clamping jaw, and the first movable clamping jaw may pass between the first arched part and the fastening part, to be connected to the moving part. Similarly, a second arched part may be further disposed at a position that is on the shielding structure and that corresponds to the second movable clamping jaw, and the second movable clamping jaw may pass between the second arched part and the fastening part, to be connected to the moving part.

In some possible implementations, there is a gap between the first movable clamping jaw and the first arched part, and the first movable clamping jaw and the first arched part may be connected by using a damping glue. In this case, a damping force of the damping glue may be transmitted to the moving part through the first movable clamping jaw, to provide guarantee for smooth movement of the moving part.

It may be understood that the damping glue may also be disposed in a gap between the second movable clamping jaw and the second arched part, so that the second movable clamping jaw is connected to the second arched part by using the damping glue. In this case, a damping force of the damping glue may also be transmitted to the moving part through the second movable clamping jaw.

In some possible implementations, the camera module may further include a bearing base plate, and the bearing base plate may be disposed on a side that is of the module circuit board and that faces away from the optical lens, to support and reinforce the module circuit board. A groove may be disposed in a region in which the bearing base plate is opposite to the moving part and the elastic part, to avoid friction obstruction caused to movement of the bearing base plate due to direct contact between the bearing base plate and the moving part and between the bearing base plate and the elastic part.

In some possible implementations, a side that is of the moving part and that is away from the optical lens may be connected to a bottom wall of the groove by using a damping glue, so that the damping glue is used to provide a damping force that quickly stabilizes the moving part. This ensures motion stability of the moving part.

In some possible implementations, the camera module may further include a second support pillar, where the second support pillar may be disposed between the moving part and the bottom wall of the groove, one end of the second support pillar is fastened to the bottom wall of the groove, and the other end may be disposed in contact with the moving part, and a height of the second support pillar is greater than a gap between the moving part and the bottom wall of the groove. Based on a supporting action of the second support pillar, a vertical section difference is generated between the moving part and the fastening part, and the elastic part is deformed vertically. Therefore, the elastic part applies a pre-pressure to the moving part, and the pre-pressure can make the moving part and an end of the second support pillar always be in close contact. This can reduce a risk of vertical displacement of the moving part, and overcome a problem of posture difference of the moving part.

For example, there may be at least three second support pillars, and these second support pillars may be evenly distributed on sides of the moving part, to improve uniformity force exertion of the moving part.

In some possible implementations, the wire of the actuator may be a shape memory alloy wire. In this case, a power supply loop may be disposed on the module circuit board, and the wire may be electrically connected to the power supply loop. In this way, the wire can be heated by energizing the wire, to make the wire shrink and deform.

In some possible implementation solutions, the camera module may further include a chip bearing base plate, the photosensitive chip may be disposed on the chip bearing base plate, and the chip bearing base plate is fastened to the moving part. For example, the photosensitive chip and the moving part may be electrically connected to the chip bearing base plate through a wire bonding process.

In some possible implementations, the camera module may further include a reflection component. The reflection component may be disposed on a light entry side of the optical lens, and is configured to divert ambient light and emit the ambient light onto the light entry side of the optical lens. According to this structure, components of the camera module are distributed in a thickness direction of the electronic device, so that the camera module can be used in an electronic device with an ultra-thin design.

According to a second aspect, this application further provides an electronic device. The electronic device includes a housing and the camera module in the foregoing implementation, and the camera module is disposed in the housing. The camera module of the electronic device has better image stabilization performance, and occupies less space in the electronic device. Therefore, this helps reduce an overall volume of the electronic device.

### BRIEF DESCRIPTION OF DRAWINGS

FIG. 1 is a schematic of a structure of an electronic device 1 according to an embodiment of this application;
FIG. 2 is a partially exploded schematic of the electronic device in FIG. 1;
FIG. 3 is a schematic of a cross section of a structure of the electronic device shown in FIG. 1 at A-A;
FIG. 4 is a schematic of another cross section of a structure of the electronic device shown in FIG. 1 at A-A;
FIG. 5 is a schematic of a structure of a module circuit board according to an embodiment of this application;
FIG. 6 is a schematic of another structure of a module circuit board according to an embodiment of this application;
FIG. 7 is a partial enlarged view of the module circuit board shown in FIG. 5 at A;
FIG. 8 is a schematic of a cross section of a structure of an elastic arm shown in FIG. 7;
FIG. 9 is a schematic of another structure of a module circuit board according to an embodiment of this application;
FIG. 10 is a schematic of another structure of a module circuit board according to an embodiment of this application;
FIG. 11 is a schematic of another structure of a module circuit board according to an embodiment of this application;
FIG. 12 is a schematic of a cross section of the structure of the module circuit board shown in FIG. 11 at B-B;
FIG. 13 is a simplified schematic of the structure of the module circuit board shown in FIG. 11;
FIG. 14 is a schematic of a cross section of the structure of the module circuit board shown in FIG. 11 at C-C;
FIG. 15 is a schematic of another structure of a module circuit board according to an embodiment of this application;
FIG. 16 is a schematic of a cross section of the structure of the module circuit board shown in FIG. 15 at D-D;
FIG. 17 is a simplified schematic of the structure of the module circuit board shown in FIG. 15;
FIG. 18 is a schematic of another structure of a module circuit board according to an embodiment of this application; and
FIG. 19 is a schematic of a cross section of the structure of the module circuit board shown in FIG. 18 at E-E.

### Reference numerals:

1-electronic device; 100-housing; 200-screen; 300-host circuit board; 400-camera module; 110-middle frame;
120-rear cover; 210-first cover plate; 220-display; 310-avoidance space; 121-light inlet hole;
122-camera decorative part; 123-second cover plate; 410-optical lens; 420-module circuit board; 430-photosensitive chip;
440-optical filter; 450-support; 451-through hole; 452-countersunk hole; 490-reflection component; 491-mounting base;
492-reflection member; 4921-light incident surface; 4922-reflection surface; 4923-light exit surface; 460-flexible printed circuit board;
461-board-to-board connector; 421-fastening part; 422-moving part; 423-elastic part; 4211-first frame;
4212-second frame; 4213-third frame; 4214-fourth frame; 4221-first side wall; 4222-second side wall;
4223-third side wall; 4224-fourth side wall; 4225-mounting groove; 4215-first protrusion; 4216-second protrusion;
4226-third protrusion; 4227-fourth protrusion; 4231-first elastic component; 4232-second elastic component;
4233-third elastic component; 4234-fourth elastic component; 4235-elastic arm; 4236-connecting member; 42351-substrate;
42352-first layer of subboard; 423521-power cable; 42353-second layer of subboard; 423531-shield layer;
42354-third layer of subboard; 423541-signal cable; 424-actuator; 4241-first fastened clamping jaw;
4242-second fastened clamping jaw; 4243-first movable clamping jaw; 4244-second movable clamping jaw; 42431-first end of the first movable clamping jaw;
42432-second end of the first movable clamping jaw; 42441-first end of the second movable clamping jaw;
42442-second end of the second movable clamping jaw; 4245-first wire; 4246-second wire; 4247-third wire;
4248-fourth wire; 42443-fastening clip; 4217-first hole; 4218-second hole; 42411 -first jaw part;
42412-second jaw part; 42421-third jaw part; 42422-fourth jaw part; 425-shielding structure;
4251-first arched part; 4252-second arched part; 426-first support pillar; 4253-first extension part;
4254-second extension part; 427-second support pillar; 470-bearing base plate; 471-groove; 480-chip bearing base plate;
481-chip mounting groove; 482-reinforcing plate; and 4228-avoidance groove.

### DESCRIPTION OF EMBODIMENTS

The following clearly and completely describes technical solutions in implementations of this application with reference to the accompanying drawings in implementations of this application.

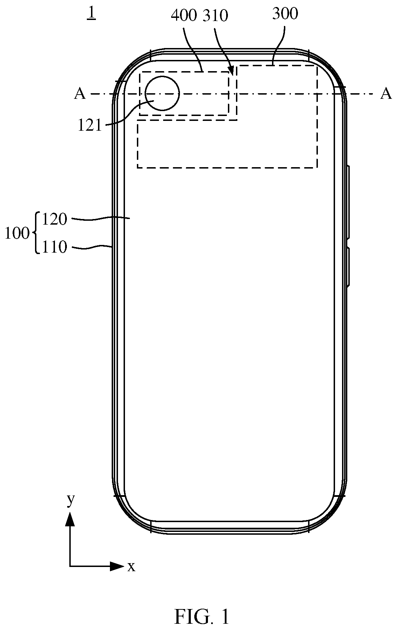

FIG. 1 is a schematic of a structure of an electronic device 1 according to an embodiment of this application. The electronic device 1 may be a mobile phone, a tablet computer (tablet personal computer), a laptop computer (laptop computer), a personal digital assistant (personal digital assistant, PDA for short), a camera, a personal computer, a notebook computer, a vehicle-mounted device, a wearable device, augmented reality (augmented reality, AR for short) glasses, an AR helmet, virtual reality (virtual reality, VR for short) glasses or a VR helmet, or devices in other forms with photographing and video recording functions. The electronic device 1 in the embodiment shown in FIG. 1 is described by using a mobile phone as an example.

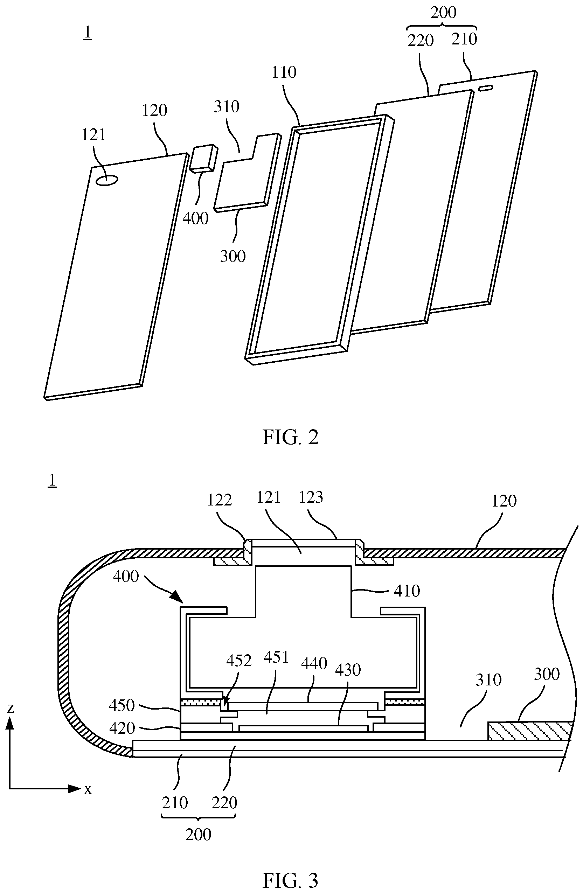

FIG. 2 is a partially exploded schematic of the electronic device shown in FIG. 1. As shown in FIG. 1 and FIG. 2, the electronic device 1 may include a housing 100, a screen 200, a host circuit board 300, and a camera module 400. It should be noted that FIG. 1, FIG. 2, and the following related accompanying drawings schematically show only some components included in the electronic device 1, and actual shapes, actual sizes, actual locations, and actual structures of these components are not limited by FIG. 1, FIG. 2, and the following accompanying drawings. In addition, when the electronic device 1 is a device in another form, the electronic device 1 may not include the screen 200 and the host circuit board 300.

For ease of description, a width direction of the electronic device 1 is defined as a first direction (an x axis), a length direction of the electronic device 1 is defined as a second direction (a y axis), and a thickness direction of the electronic device 1 is defined as a third direction (a z axis). It may be understood that coordinate system settings of the electronic device 1 may be flexibly set according to a specific actual requirement.

The housing 100 includes a middle frame 110 and a rear cover 120. The rear cover 120 is fastened to a side of the middle frame 110. In an implementation, the rear cover 120 is fastened to the middle frame 110 by using an adhesive. In another implementation, the rear cover 120 and the middle frame 110 form an integrally formed structure, that is, the rear cover 120 and the middle frame 110 are of an integral structure.

In another embodiment, the housing 100 may also include a middle plate (not shown in the figure). The middle plate is connected to an inner surface of the middle frame 110. The middle plate and the rear cover 120 are opposite to each other and spaced apart.

Refer to FIG. 2 again. The screen 200 is fastened to another side of the middle frame 110. At this time, the screen 200 is disposed opposite to the rear cover 120. The screen 200, the middle frame 110, and the rear cover 120 together enclose the inside of the electronic device 1. Components of the electronic device 1 such as a battery, a receiver, and a microphone may be placed inside the electronic device 1.

In this embodiment, the screen 200 may be configured to display an image, a text, or the like. The screen 200 may be a flat screen, or may be a curved screen. The screen 200 includes a first cover plate 210 and a display 220. The first cover plate 210 is disposed on a side that is of the display 220 and that is away from the middle frame 110. The first cover plate 210 may be disposed close to the display 220, and may be mainly configured to protect the display 220 and prevent dust. A material of the first cover plate 210 may be, but is not limited to, glass. The display 220 may be an organic light-emitting diode (organic light-emitting diode, OLED) display, an active matrix organic light-emitting diode or an active-matrix organic light-emitting diode (active-matrix organic light-emitting diode, AMOLED) display, a quantum dot light-emitting diode (quantum dot light-emitting diode, QLED) display, or the like.

FIG. 3 is a schematic of a cross section of a structure of the electronic device shown in FIG. 1 at A-A. As shown in FIG. 2 and FIG. 3, the host circuit board 300 is fastened inside the electronic device 1. Specifically, the host circuit board 300 may be fastened to a side that is of the screen 200 and that faces the rear cover 120. In another embodiment, when the housing 100 includes a middle plate, the host circuit board 300 may be fastened to a surface that is of the middle plate and that faces the rear cover 120.

It may be understood that the host circuit board 300 may be a rigid printed circuit board, or may be a flexible printed circuit board, or may be a rigid-flex printed circuit board. The host circuit board 300 may be an FR-4 dielectric board, a Rogers (Rogers) dielectric board, a hybrid dielectric board of FR-4 and Rogers, or the like. Here, the FR-4 is a designation for a flame resistant material grade, and the Rogers dielectric plate is a high frequency plate. In addition, the host circuit board 300 may be configured to set a chip. The chip may be a central processing unit (central processing unit, CPU), a graphics processing unit (graphics processing unit, GPU), a universal flash storage (universal flash storage, UFS), or the like.

Still refer to FIG. 2 and FIG. 3. The camera module 400 is fastened inside the electronic device 1. Specifically, the camera module 400 is fastened to the side that is of the screen 200 and that faces the rear cover 120. In another embodiment, when the housing 100 includes the middle plate, the camera module 400 may be fastened to the surface that is of the middle plate and that faces the rear cover 120.

In addition, the host circuit board 300 is provided with avoidance space 310. A shape of the avoidance space 310 is not limited to a rectangular shape illustrated in FIG. 1 and FIG. 2. In this case, a shape of the host circuit board 300 is not limited to a "┘" type shown in FIG. 1 and FIG. 2. The camera module 400 is located in the avoidance space 310. In this way, in a Z-axis direction, the camera module 400 and the host circuit board 300 overlap in a region, to avoid an increase in a thickness of the electronic device 1 caused by overlapping of the camera module 400 on the host circuit board 300. In another embodiment, the host circuit board 300 may not be provided with the avoidance space 310. In this case, the camera module 400 may be overlapped on the host circuit board 300, or disposed at an interval from the host circuit board 300.

In this embodiment, the camera module 400 is electrically connected to the host circuit board 300. Specifically, the camera module 400 is electrically connected to a CPU through the host circuit board 300. When the CPU receives an instruction of a user, the CPU can send a signal to the camera module 400 by using the host circuit board 300, to control the camera module 400 to shoot an image or record a video. In another embodiment, when the host circuit board 300 is not disposed in the electronic device 1, the camera module 400 may also directly receive an instruction of the user, and shoot an image or record a video according to the instruction of the user.

Refer to FIG. 3 again. The rear cover 120 is provided with a light inlet hole 121, and the light inlet hole 121 may connect the inside of the electronic device 1 to the outside of the electronic device 1. The electronic device 1 further includes a camera decorative part 122 and a second cover plate 123. A part of the camera decorative part 122 may be fastened to an inner surface of the rear cover 120, and a part of the camera decorative part 122 contacts a hole wall of the light inlet hole 121. The second cover plate 123 is fastened to an inner wall of the camera decorative part 122. The camera decorative part 122 and the second cover plate 123 separate the inside of the electronic device 1 from the outside of the electronic device 1, to prevent external water or dust from entering the inside of the electronic device 1 through the light inlet hole 121. A material of the second cover plate 123 is a transparent material, for example, may be glass or plastic. In this case, ambient light outside the electronic device 1 can pass through the second cover plate 123 and enter the inside of the electronic device 1. The camera module 400 collects the ambient light entering the inside of the electronic device 1.

It may be understood that a shape of the light inlet hole 121 is not limited to a circle shown in FIG. 1 and FIG. 2. For example, the shape of the light inlet hole 121 may also be an ellipse, another irregular shape, or the like.

In another embodiment, the camera module 400 may also collect ambient light passing through the rear cover 120. Specifically, a material of the rear cover 120 is a transparent material, for example, glass or plastic. A surface that is of the rear cover 120 and that faces the inside of the electronic device 1 is partially coated with ink and partially uncoated with ink. In this case, a region uncoated with the ink may form a light-transmitting region. When the ambient light enters the inside of the electronic device 1 through the light-transmission region, the camera module 400 can collect the ambient light. In other words, the electronic device 1 in this embodiment does not need to be provided with the light inlet hole 121, and does not need to be provided with the camera decorative part 122 and the second cover plate 123. The electronic device 1 has high integrity and costs are low.

Still refer to FIG. 3. The camera module 400 may include an optical lens 410, a module circuit board 420, and a photosensitive chip 430. A light exit direction of the optical lens 410 is the same as an optical axis direction of the camera module 400. The module circuit board 420 may be fastened to a light exit side of the optical lens 410, that is, the module circuit board 420 is located on an image side of the optical lens 410. The module circuit board 420 may be electrically connected to the host circuit board 300 to enable signal transmission between the host circuit board 300 and the module circuit board 420. The photosensitive chip 430 is fastened to a side that is of the module circuit board 420 and that faces the optical lens 410, and may be configured to collect ambient light on the light exit side of the optical lens 410 and generate a signal. The photosensitive chip 430 is electrically connected to the module circuit board 420, so that the signal generated by the photosensitive chip 430 can be transmitted to the host circuit board 300 through the module circuit board 420. During specific implementation, the photosensitive chip 430 may be an image sensor like a metal oxide semiconductor element (complementary metal-oxide-semiconductor, CMOS) or a charge coupled device (charge coupled device, CCD).

In some embodiments, the camera module 400 may further include an optical filter 440, and the optical filter 440 may be located on a side that is of the photosensitive chip 430 and that faces the optical lens 410. The optical filter 440 may be configured to: filter out stray light of ambient light that passes through the optical lens 410, and enable filtered ambient light to be transmitted to the photosensitive chip 430. This ensures that an image shot by the electronic device has better definition. The optical filter 440 may be, but is not limited to, a blue glass optical filter. For example, the optical filter 440 may also be a reflective infrared optical filter, or a dual-pass optical filter (visible light and infrared light in ambient light can simultaneously pass through the dual-pass optical filter, or visible light and other light of a specific wavelength (for example, ultraviolet light) in ambient light can simultaneously pass through the dual-pass optical filter, or infrared light and other light of a specific wavelength (for example, ultraviolet light) can simultaneously pass through the dual-pass optical filter).

To fix a position of the optical filter 440, the camera module 400 may further include a support 450 disposed between the optical lens 410 and the module circuit board 420. Two sides of the support 450 are respectively fastened to the optical lens 410 and the module circuit board 420, and a specific fastening manner may be bonding. The optical filter 440 may be disposed on a side of the support 450. A through hole 451 is provided in a region corresponding to the photosensitive chip 430 on the support 450, so that ambient light can smoothly enter the photosensitive chip 430. In addition, when the optical filter 440 is disposed on a side that is of the support 450 and that faces the optical lens 410, the side that is of the support 450 and that faces the optical lens 410 may be further provided with a countersunk hole 452, and a diameter of the countersunk hole 452 may be slightly greater than a diameter of the through hole 451. In this way, a stepped structure may be formed between the countersunk hole 452 and the through hole 451, and the optical filter 440 may be specifically disposed on the stepped structure, to reduce a thickness after the optical filter 440 is assembled with the support 450. This helps reduce a size of the camera module 400 in the z-axis direction.

It may be understood that, in another embodiment of this application, the optical filter 440 may also be disposed on a side that is of the support 450 and that faces the module circuit board 420. In this case, the side that is of the support 450 and that faces the module circuit board 420 may be provided with a countersunk hole, and a stepped structure for supporting the optical filter 440 is formed on this side.

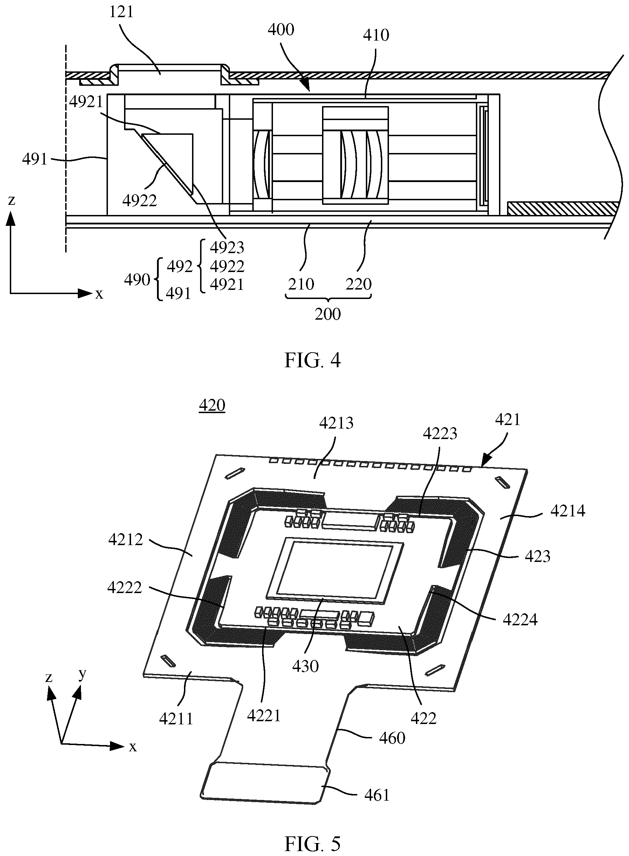

FIG. 4 is a schematic of another cross section of a structure of the electronic device shown in FIG. 1 at A-A. As shown in FIG. 2 and FIG. 4, in this embodiment of this application, the camera module 400 may alternatively be designed in a periscope structure. This structure can reduce components distributed in the camera module 400 in a thickness direction of a mobile phone, so that the camera module 400 can be used in the electronic device 1 with an ultra-thin design.

During specific implementation, for relative position relationships of components such as the optical lens 410, the module circuit board, the photosensitive chip, and the optical filter of the camera module 400, refer to the disposing manner of the foregoing embodiment. Details are not described herein again. In addition to the foregoing components, the camera module 400 may further include a reflection component 490, and the reflection component 490 is fastened to a light incident side of the optical lens 410. The reflection component 490 is configured to reflect ambient light, so that the ambient light is transmitted into the optical lens 410. In this embodiment, the reflection component 490 may be configured to reflect ambient light that travels in the z-axis direction into ambient light that travels in an x-axis direction. In other embodiments, the reflection component 490 may also be configured to reflect ambient light that travels in the z-axis direction into ambient light that travels in another direction.

The reflection component 490 may include a mounting base 491 and a reflection member 492, where the reflection member 492 is disposed on the mounting base 491. The reflection member 492 may be a prism, or may be a mirror reflector. The reflection member 492 in this embodiment is described by using the prism as an example. The reflection member 492 may include a light incident surface 4921, a reflection surface 4922, and a light exit surface 4923. The reflection surface 4922 is connected between the light incident surface 4921 and the light exit surface 4923. The light incident surface 4921 is disposed opposite to a light inlet hole, and the light exit surface 4923 is disposed opposite to the light incident side of the optical lens 410. In this case, when ambient light enters the inside of the electronic device through the light inlet hole 121, the ambient light enters the reflection member 492 through the light incident surface 4921, and is reflected on the reflection surface 4922 of the reflection member 492. At this time, the ambient light that travels in the z-axis direction is reflected and then travels in the x-axis direction. Finally, the ambient light is transmitted out of the reflection member 492 through the light exit surface 4923 of the reflection member 492, and enters the optical lens 410.

It may be understood that, the reflection component 490 is disposed, so that the ambient light that travels in the z-axis direction is reflected and then travels in the x-axis direction through the reflection component 490. In this way, components of the camera module 400 that receive ambient light that travels in the x-axis direction may be arranged in the x-axis direction. Because a size of the electronic device in the x-axis direction is large, arrangement of the components in the camera module 400 in the x-axis direction is flexible and simple. In this embodiment, an optical axis direction of the camera module 400 is the x-axis direction. In another embodiment, the optical axis direction of the camera module 400 may also be a y-axis direction.

FIG. 5 is a schematic of a structure of a module circuit board according to an embodiment of this application. Refer to FIG. 5. In this embodiment of this application, the module circuit board 420 may be of a roughly rectangular structure. When the module circuit board 420 is electrically connected to the host circuit board, the camera module may further include a flexible printed circuit board 460. The flexible printed circuit board 460 may be disposed at an end of the module circuit board 420 and electrically connected to the module circuit board 420. A board-to-board (board-to-board, BTB) connector 461 may be disposed at an end that is of the flexible printed circuit board 460 and that is away from the module circuit board 420. Correspondingly, a mating connector corresponding to the board-to-board connector may be disposed on the host circuit board. An electrical connection between the flexible printed circuit board 460 and the host circuit board may be implemented by mating and plugging between the board-to-board connector 461 and the mating connector, to implement an electrical connection between the camera module and the host circuit board.

In a specific implementation solution, the module circuit board 420 and the flexible printed circuit board 460 may be a rigid-flex printed circuit board of an integrated structure, that is, the module circuit board 420 and the flexible printed circuit board 460 may be integrally formed by using a manufacturing process of the rigid-flex printed circuit board. Compared with a conventional soldering manner, an integrated design used in embodiments of this application can not only simplify a subsequent assembly process, but also avoid a reliability problem caused by a complex soldering process and a large quantity of solder joints.

The entire module circuit board 420 may be designed in a laminated structure, and may include a substrate and a subboard disposed on the substrate. There may be one or more layers of subboards, and a quantity of subboards may be specifically set based on a quantity of lines in the camera module. For example, the module circuit board 420 in this embodiment may include three layers of subboards.

The substrate may be manufactured by using a rigid material with high strength, to reliably support each component disposed on the module circuit board 420 in a z direction. For example, a material of the substrate may be specifically titanium copper. A thickness of the substrate may be set between 5 µm and 300 µm. For example, the thickness of the substrate may be specifically 5 µm, 50 µm, 100 µm, 250 µm, 300 µm, or the like.

A base material of each layer of subboard may be polyimide (polyimide, Pi). A thickness of the base material of each layer of subboard may be set between 15 µm and 25 µm, for example, may be specifically 15 µm, 20 µm, 25 µm, or the like. It should be noted that, when the module circuit board 420 includes three layers of subboards, in a direction away from the substrate, a first layer of subboard may be configured to provide a power cable and a signal cable, a second layer of subboard may be configured to provide a shield layer, and a third layer of subboard may be configured to provide a signal cable.

As shown in FIG. 5, in a spatial structure, the module circuit board 420 may be further divided into a fastening part 421, a moving part 422, and an elastic part 423. The elastic part 423 may be separately connected to the fastening part 421 and the moving part 422, and the moving part 422 is elastically connected to the fastening part 421 because of an elastic characteristic of the elastic part 423, so that the moving part 422 can move relative to the fastening part 421 when deformed. During specific implementation, the flexible printed circuit board 460 may be connected to the fastening part 421. The photosensitive chip 430 may be disposed on the moving part 422, so that when the moving part 422 moves relative to the fastening part 421, the photosensitive chip 430 may also synchronously move, to change an imaging position on a surface of the photosensitive chip 430. Based on this principle, when the electronic device is used to perform photographing, if the electronic device shakes, real-time detection is performed on parameters such as a shake direction and a shake amplitude of the electronic device, and a position of the photosensitive chip 430 is reversely adjusted based on a detection result, to compensate for a change of the imaging position on the photosensitive chip 430 caused by shake of the electronic device. This can achieve an effect of optical image stabilization.

It should be noted that in this embodiment, the fastening part 421, the moving part 422, and the elastic part 423 may have a same laminated structure in the z direction. In this case, the fastening part 421, the moving part 422, and the elastic part 423 may be of an integrally formed structure. During specific implementation, the fastening part 421, the moving part 422, and the elastic part 423 may be formed from an entire circuit board through laser cutting. This helps simplify a manufacturing and assembling process of the camera module.

In some embodiments, the fastening part 421 may be of a roughly frame-shaped structure. For example, when the module circuit board 420 is of a rectangular structure, the moving part 422 may be specifically a rectangular frame. In this case, the fastening part 421 may include a first frame 4211, a second frame 4212, a third frame 4213, and a fourth frame 4214 that are successively connected. The first frame 4211 is opposite to the third frame 4213, and the second frame 4212 is opposite to the fourth frame 4214.

The moving part 422 may be disposed on an inner side of the fastening part 421, and there is a specific interval between the moving part 422 and the fastening part 421. The moving part 422 may include a first side wall 4221, a second side wall 4222, a third side wall 4223, and a fourth side wall 4224 that are sequentially connected. The first side wall 4221, the second side wall 4222, the third side wall 4223, and the fourth side wall 4224 may be respectively disposed on a same side as the first frame 4211, the second frame 4212, the third frame 4213, and the fourth frame 4214 of the fastening part 421.

In some implementations, the photosensitive chip 430 may be disposed on a surface of a side that is of the moving part 422 and that faces the optical lens. The photosensitive chip 430 may be electrically connected to the moving part 422 through a wire bonding (wire bonding, WB) process. Certainly, the photosensitive chip 430 may be mounted on the moving part 422 by using a chip on board (chip on board, COB) technology, or may be packaged on the moving part by using a ball grid array (ball grid array, BGA) technology or a land grid array (land grid array, LGA) technology.

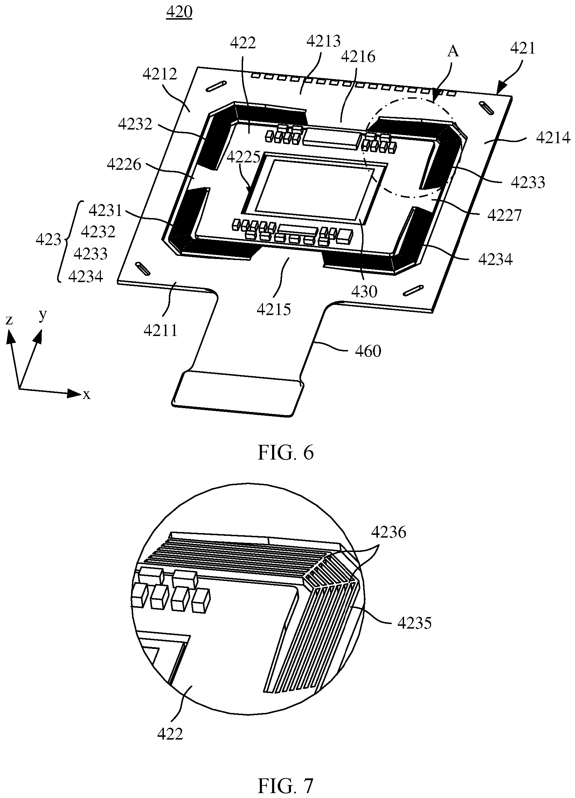

FIG. 6 is a schematic of a structure of another module circuit board according to an embodiment of this application. In the implementation shown in FIG. 6, a mounting groove 4225 may be disposed on a part of the moving part 422. In this case, the photosensitive chip 430 may be disposed in the mounting groove 4225. In this way, the photosensitive chip 430 and the moving part 422 may overlap in a region in a z-axis direction. This helps reduce a size of the camera module in the z-axis direction. In addition, a reinforcing plate may be fastened to a side that is of the moving part 422 and that is away from the optical lens. The reinforcing plate may be disposed at the mounting groove 4225 to support the photosensitive chip 430, so that the moving part 422 and the photosensitive chip 430 are relatively fastened. This improves structural reliability of the camera module. For example, the reinforcing plate may be a steel plate.

In addition, an electronic component or another chip (for example, a drive chip) may be mounted on the module circuit board 420. The electronic component or another chip may be configured to implement functions such as assisting the photosensitive chip 430 in collecting ambient light, and assisting the photosensitive chip 430 in performing signal processing on the collected ambient light. These electronic components or chips may be disposed on the fastening part 421, or may be disposed on the moving part 422. This is not limited in this application. It is worth mentioning that when the electronic components or chips are disposed on the moving part 422, the electronic components or chips may be specifically disposed on a periphery of the photosensitive chip 430.

Still refer to FIG. 6. The elastic part 423 may be disposed in a gap between the moving part 422 and the fastening part 421, and the moving part 422 and the fastening part 421 are connected. Further, based on arrangement of a z direction laminate structure of the elastic part 423, the elastic part 423 may also be provided with conductive lines on each layer of subboard, so that the moving part 422 is electrically connected to the fastening part 421. That is, the elastic part 423 can not only mechanically connect the moving part 422 and the fastening part 421, but also realize a function of signal transmission between the moving part 422 and the fastening part 421.

As shown in FIG. 5 and FIG. 6, a first protrusion 4215 may be disposed on a side that is of the first frame 4211 of the fastening part 421 and that faces the moving part 422, and a second protrusion 4216 may be disposed on a side that is of the third frame 4213 and that faces the moving part 422. The second side wall 4222 of the moving part 422 has a third protrusion 4226 disposed toward the fastening part 421, and the fourth side wall 4224 has a fourth protrusion 4227 disposed toward the fastening part 421. In this case, the elastic part 423 may include four groups of elastic components: a first elastic component 4231, a second elastic component 4232, a third elastic component 4233, and a fourth elastic component 4234. The first elastic component 4231 is separately connected to the first protrusion 4215 and the third protrusion 4226. The second elastic component 4232 is separately connected to the third protrusion 4226 and the second protrusion 4216. The third elastic component 4233 is separately connected to the second protrusion 4216 and the fourth protrusion 4227. The fourth elastic component 4234 is separately connected to the fourth protrusion 4227 and the first protrusion 4215. Thus, the four groups of elastic components are used to establish a stable elastic connection relationship between the moving part 422 and the fastening part 421.

To ensure uniformity force exertion of the moving part 422, and further improve motion reliability of the moving part 422, during specific implementation, the first protrusion 4215 may be located in a central position of the first frame 4211, and the second protrusion 4216 may be located in a central position of the third frame 4213. In addition, the first protrusion 4215 and the second protrusion 4216 may be disposed opposite to each other. Similarly, the third protrusion 4226 may be approximately located in a central position of the second side wall 4222, the fourth protrusion 4227 may be approximately located in a central position of the fourth side wall 4224, and the third protrusion 4226 and the fourth protrusion 4227 may be disposed opposite to each other.

FIG. 7 is a partial enlarged view of the module circuit board shown in FIG. 6 at A. As shown in FIG. 6 and FIG. 7, in some embodiments, each group of elastic component may be of an angular structure, to better fit a gap between the fastening part 421 and the moving part 422. Each group of elastic component may include one or more elastic arms 4235, and the elastic arm 4235 may also be of a corresponding angular structure. In addition, to reduce processing difficulty and improve structural strength of the elastic arm 4235, during specific implementation, a corner part of the elastic arm 4235 may be designed as a chamfer structure. The elastic arms 4235 may be arranged in parallel, and adjacent elastic arms 4235 are spaced apart, and two ends of each elastic arm 4235 are respectively connected to two corresponding protrusions on the fastening part 421 and the moving part 422. In this way, elastic performance of the entire elastic component is improved on a premise that the fastening part 421 is reliably connected to the moving part 422. Conductive lines may be disposed on each of the elastic arms 4235, to establish an electrical connection relationship between the fastening part 421 and the moving part 422. A quantity of elastic arms 4235 in each group of elastic component is not limited, for example, there may be five, six, seven, or more elastic arms 4235. In actual application, the quantity of elastic arms 4235 may be set based on a quantity of signals transmitted in the camera module. Details are not described herein again.

In addition, each elastic component may further include a connecting member 4236. The connecting member 4236 may be disposed between two ends of the elastic component, for example, may be disposed at a corner position of the elastic component. The connecting member 4236 may be fastened to each elastic arm 4235. Therefore, the elastic arms 4235 are relatively fastened, and structural stability of the elastic component is ensured. For example, each elastic component may include two connecting members 4236, and the two connecting members 4236 are spaced apart in an extension direction of the elastic arms 4235. For example, the two connecting members 4236 may be respectively disposed on two sides of a chamfer of each elastic arm 4235, to further improve structural stability of the elastic component.

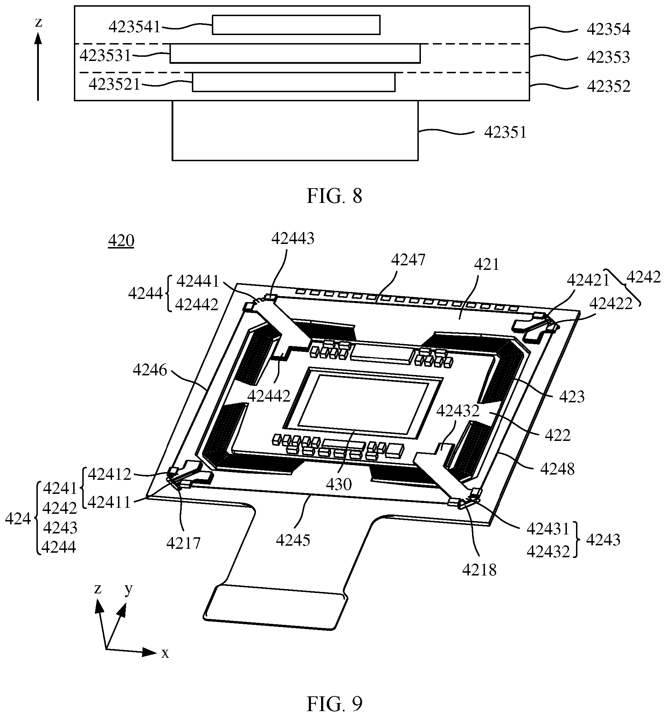

FIG. 8 is a schematic of a cross section of a structure of the elastic arm shown in FIG. 7. As described above, in the z-axis direction, the fastening part, the moving part, and the elastic part of the module circuit board may have a same laminated structure, so each elastic arm 4235 also includes a substrate 42351 and three layers of subboards disposed on the substrate 42351. During specific implementation, a width of the substrate 42351 of the elastic arm 4235 may be set between 30 µm and 200 µm. For example, the width of the substrate 42351 may be specifically 30 µm, 50 µm, 100 µm, 200 µm, or the like.

A width of each layer of subboard of the elastic arm 4235 may be set between 5 µm and 200 µm, for example, may be specifically 5 µm, 70 µm, 100 µm, 200 µm, or the like. In addition, in a first layer of subboard 42352 of the elastic arm 4235, a thickness of a power cable (or a signal cable) 423521 may be set between 5 µm and 50 µm, and a width may be set between 5 µm and 200 µm. For example, the thickness of the power cable 423521 may be specifically 5 µm, 30 µm, 50 µm, or the like, and the width may be specifically 5 µm, 70 µm, 100 µm, 200 µm, or the like. In a second layer of subboard 42353, a thickness of a shield layer 423531 may be set between 5 µm and 50 µm, and a width may be set between 5 µm and 200 µm. For example, the thickness of the shield layer 423531 may be specifically 5 µm, 30 µm, 50 µm, or the like. The width may be specifically 5 µm, 70 µm, 100 µm, 200 µm, or the like. In a third layer of subboard 42354, a thickness of a signal cable 423541 may be set between 5 µm and 50 µm, and a width may also be set between 5 µm and 200 µm. For example, the thickness of the signal cable 423541 may be specifically 5 µm, 30 µm, 50 µm, or the like, and the width may be specifically 5 µm, 70 µm, 100 µm, 200 µm, or the like.

Through arrangement of the laminated structure, the elastic arm 4235 can have a large elastic coefficient in the z direction. In this way, the moving part and a photosensitive chip disposed on the moving part can be reliably supported, and the elastic arm 4235 can be ensured to have a good elastic recovery capability. Therefore, after an external force causing deformation of the elastic arm 4235 disappears, the elastic arm 4235 can restore an initial state quickly, and a problem of posture difference of the moving part can be effectively overcome. Through simulation verification, the posture difference of the moving part can be controlled within 5 µm. In addition, when the foregoing laminated structure is used, elastic coefficients of the elastic arm 4235 in an x direction and a y direction can meet a requirement that an actuator works normally for more than 200,000 times.

FIG. 9 is a schematic of a structure of another module circuit board according to an embodiment of this application. As shown in FIG. 9, in this embodiment of this application, the camera module may further include an actuator 424, and the actuator 424 may be configured to drive the moving part 422 to move or rotate relative to the fastening part 421, to drive the photosensitive chip 430 disposed on the moving part 422 to move synchronously. Further, an imaging position of a surface of the photosensitive chip 430 is adjusted, to implement optical image stabilization. During specific implementation, the actuator 424 may include a fastened clamping jaw, a movable clamping jaw, and a wire whose length is changeable. The fastened clamping jaw is fastened to the fastening part 421, and the movable clamping jaw is fastened to the moving part 422. Two ends of the wire are fastened to the fastened clamping jaw and the movable clamping jaw respectively, so that a force state of the movable clamping jaw can be adjusted by controlling a telescopic state of the wire, so that the movable clamping jaw generates corresponding movement under an action of an external force, and further drives the moving part 422 to move synchronously.

In some embodiments, there may be two fastened clamping jaws, and the two fastened clamping jaws are defined as a first fastened clamping jaw 4241 and a second fastened clamping jaw 4242. During specific implementation, the first fastened clamping jaw 4241 and the second fastened clamping jaw 4242 may be separately disposed on a side that is of the fastening part 421 and that faces the optical lens, and the first fastened clamping jaw 4241 and the second fastened clamping jaw 4242 may be disposed diagonally. For example, the first fastened clamping jaw 4241 may be approximately located at a corner position formed by a first frame and a second frame, and the second fastened clamping jaw 4242 may be approximately located at a corner position formed by a third frame and a fourth frame.

Similarly, there may be two movable clamping jaws, namely, a first movable clamping jaw 4243 and a second movable clamping jaw 4244. The first movable clamping jaw 4243 and the second movable clamping jaw 4244 may likewise be located on a side that is of the module circuit board 420 and that faces the optical lens, and the first movable clamping jaw 4243 and the second movable clamping jaw 4244 may also be arranged diagonally. During specific arrangement, the two movable clamping jaws each may be of a strip structure. An orthographic projection of a first end 42431 of the first movable clamping jaw 4243 on the module circuit board 420 may fall on the fastening part 421, and may be approximately located at a corner position formed by the first frame and the fourth frame. A second end 42432 of the first movable clamping jaw 4243 may extend above the moving part 422 and be fastened to the moving part 422. An orthographic projection of a first end 42441 of the second movable clamping jaw 4244 on the module circuit board 420 may also fall on the fastening part 421, and may be approximately located at a corner position formed by the second frame and the third frame. A second end 42442 of the second movable clamping jaw 4244 may extend above the moving part 422 and be fastened to the moving part 422.

When the two fastened clamping jaws and the two movable clamping jaws are connected, four wires may be provided correspondingly, and the four wires may be respectively a first wire 4245, a second wire 4246, a third wire 4247, and a fourth wire 4248. During specific arrangement, two ends of the first wire 4245 are respectively fastened to the first fastened clamping jaw 4241 and the first end 42431 of the first movable clamping jaw 4243. Two ends of the second wire 4246 are respectively fastened to the first fastened clamping jaw 4241 and the first end 42441 of the second movable clamping jaw 4244. Two ends of the third wire 4247 are respectively fastened to the first end 42441 of the second movable clamping jaw 4244 and the second fastened clamping jaw 4242. The fourth wire 4248 is separately fastened to the second fastened clamping jaw 4242 and the first end 42431 of the first movable clamping jaw 4243. In this case, the first wire 4245, the second wire 4246, the third wire 4247, and the fourth wire 4248 may be sequentially connected to form a ring-shaped structure through the two movable clamping jaws and the two fastened clamping jaws.

In this embodiment, the first wire 4245 and the third wire 4247 may be disposed in parallel, and the second wire 4246 and the fourth wire 4248 may be disposed in parallel. For example, the first wire 4245 and the third wire 4247 may be separately disposed in the x direction, and the second wire 4246 and the fourth wire 4248 may be separately disposed in the y direction. In addition, to improve connection reliability between each wire and each of the fastened clamping jaw and the movable clamping jaw, the fastened clamping jaw and the movable clamping jaw (or each jaw part) each may be provided with a fastening clip 42443. Two ends of each wire can be fastened inside fastening clips 42443 of corresponding fastened clamping jaws and movable clamping jaws.

It is worth mentioning that both the fastened clamping jaws and the movable clamping jaws can be made of metal materials. For example, during manufacture, two fastened clamping jaws and two movable clamping jaws can be respectively formed by cutting or etching an entire metal material strip, and a part of the material strip connecting the two fastened clamping jaws and the two movable clamping jaws, for example, a material strip located on a periphery of the four clamping jaws, and a material strip that is located on inner sides of the four clamping jaws and that implements cross-connection of the four clamping jaws, may be retained during the cutting or etching process. A material strip located around the clamping jaws may respectively stretch the four clamping jaws outward, and a material strip located on inner sides of the clamping jaws may stretch the four clamping jaws inward, to position the four clamping jaws. This helps ensure flatness of the overall structure. Then, the four wires can be respectively fastened between adjacent fastened clamping jaws and movable clamping jaws by using a wire assembly device, and the two fastened clamping jaws and the two movable clamping jaws can be fastened to the module circuit board through soldering. An excess connecting material strip can then be removed to obtain a complete actuator.

Still refer to FIG. 9. In this embodiment, the fastening part may be provided with a first hole 4217, and the first hole 4217 may be disposed close to the first fastened clamping jaw 4241, for example, specifically, may be located on a side that is of the first fastened clamping jaw 4241 and that faces away from the moving part 422. At least a part of a projection that is of an extension line at an end of the first wire 4245 connected to the first fastened clamping jaw 4241 and that is on the module circuit board 420 may be located in the first hole 4217. When a cutting device is used to cut the end of the first wire 4245 to adjust a length of the first wire 4245, the first hole 4217 may avoid the cutting device, to avoid damage caused by the cutting device to the module circuit board 420, and ensure feasibility of cutting operation. In addition, at least a part of a projection that is of an extension line at an end of the second wire 4246 connected to the first fastened clamping jaw 4241 and that is on the module circuit board 420 may also be located in the first hole 4217, so that the cutting device can adjust a length of the second wire 4246.

Similarly, the fastening part may be further provided with a second hole (not shown in the figure), a third hole 4218, and a fourth hole (not shown in the figure). The second hole may be disposed close to the second fastened clamping jaw 4242, for example, specifically, may be located on a side that is of the second fastened clamping jaw 4242 and that faces away from the moving part 422. At least a part of a projection that is of an extension line at an end of the third wire 4247 connected to the second fastened clamping jaw 4242 and that is on the module circuit board 420 may be located in the second hole, and at least a part of a projection that is of an extension line at an end of the fourth wire 4248 connected to the second fastened clamping jaw 4242 and that is on the module circuit board 420 may also be located in the second hole, so that the second hole is used to avoid the cutting device. It is convenient for the cutting device to adjust lengths of the third wire 4247 and the fourth wire 4248.

The third hole 4218 may be disposed close to the first movable clamping jaw 4243, for example, specifically, may be located on a side that is of the first movable clamping jaw 4243 and that faces away from the moving part 422. At least a part of a projection that is of an extension line at an end of the first wire 4245 connected to the first movable clamping jaw 4243 and that is on the module circuit board 420 may be located in the third hole 4218, and at least a part of a projection that is of an extension line at an end of the fourth wire 4248 connected to the first movable clamping jaw 4243 and that is on the module circuit board 420 may also be located in the third hole 4218, so that the third hole 4218 is used to avoid the cutting device. It is convenient for the cutting device to adjust lengths of the first wire 4245 and the fourth wire 4248.

The fourth hole may be disposed close to the second movable clamping jaw 4244, for example, specifically, may be located on a side that is of the second movable clamping jaw 4244 and that faces away from the moving part 422. At least a part of a projection that is of an extension line at an end of the second wire 4246 connected to the second movable clamping jaw 4244 and that is on the module circuit board 420 may be located in the fourth hole, and at least a part of a projection that is of an extension line at an end of the third wire 4247 connected to the second movable clamping jaw 4244 and that is on the module circuit board 420 may also be located in the fourth hole, so that the fourth hole is used to avoid the cutting device. It is convenient for the cutting device to adjust lengths of the second wire 4246 and the third wire 4247.

In some embodiments, to reduce difficulty of implementing stretchability performance of the wire, the four wires each may be manufactured by a shape memory alloy (shape memory alloy, SMA). The shape memory alloy is a generic term for a type of metal with a shape memory effect. The shape memory effect is specifically: when a temperature of the shape memory alloy is lower than a memory temperature, the shape memory alloy may show one structural form, or when a temperature of the shape memory alloy is higher than a memory temperature, an internal crystal structure of the shape memory alloy changes, making the shape memory alloy deform, and in this case, the shape memory alloy may show one structural form. Specifically, in this embodiment of this application, when a temperature of the wire is lower than a memory temperature of the wire, the wire is in a slack state, or when a temperature of the wire is higher than a memory temperature, a length of the wire is shortened, and the wire is in a shrink deformation state. In addition, it should be understood that, when the wire is in the slack state and is subject to a specific external force, the wire may also be stretched and deformed, so that the length of the wire increases. Therefore, the wire in this embodiment of this application may further have a tensile deformation state.

To facilitate temperature control of the wires, each wire may be connected to a power supply loop of the module circuit board 420. For example, when a first layer of subboard of the module circuit board 420 is used for disposing a power cable, vias may be disposed on the fastening part 421 and the moving part 422, and each fastened clamping jaw and movable clamping jaw is electrically connected to a power cable of the first layer of subboard through the vias. Each wire is then electrically connected to the power supply loop, so that the wire can be heated by energizing the wire, to make the wire shrink and deform.

It should be noted that, in this embodiment, the first fastened clamping jaw 4241 may further include a first jaw part 42411 and a second jaw part 42412. The first jaw part 42411 may be configured to connect to the first wire 4245, and the second jaw part 42412 may be configured to connect to the second wire 4246. The first jaw part 42411 and the second jaw part 42412 are insulated from each other, and the first jaw part 42411 and the second jaw part 42412 may be separately connected to the power cable through corresponding vias. Similarly, the second fastened clamping jaw 4242 may further include a third jaw part 42421 and a fourth jaw part 42422. The third jaw part 42421 may be configured to connect to the third wire 4247, and the fourth jaw part 42422 may be configured to connect to the fourth wire 4248. The third jaw part 42421 and the fourth jaw part 42422 are insulated from each other, and the third jaw part 42421 and the fourth jaw part 42422 may be separately connected to the power cable through corresponding vias.

In this case, the first movable clamping jaw 4243 and the second movable clamping jaw 4244 may be separately connected to a positive electrode end of the power cable, and the two jaw parts of the first fastened clamping jaw 4241 and the two jaw parts of the second fastened clamping jaw 4242 may be separately connected to a negative electrode end of the power cable. That is, the first wire 4245 and the fourth wire 4248 may share a positive electrode through the first movable clamping jaw 4243, and the second wire 4246 and the third wire 4247 may share a positive electrode through the second movable clamping jaw 4244. The four wires are respectively connected to different negative electrode ends through each jaw part, so that the four wires can be connected to different power supply loops, to realize separate control of a power status of each wire.

In some other embodiments, the two fastened clamping jaws may be connected to the positive electrode end of the power cable, and the two movable clamping jaws may be separated into two insulated parts to connect to the negative electrode end of the power cable. During specific implementation, the first movable clamping jaw may include a fifth jaw part and a sixth jaw part. The fifth jaw part may be configured to connect to the first wire, and the sixth jaw part may be configured to connect to the fourth wire. The fifth jaw part and the sixth jaw part are insulated from each other, and the fifth jaw part and the sixth jaw part may be respectively connected to different negative electrode ends of the power cable through corresponding vias. Similarly, the second movable clamping jaw may include a seventh jaw part and an eighth jaw part, the seventh jaw part may be configured to connect to the second wire, and the eighth jaw part may be configured to connect to the third wire. The seventh jaw part and the eighth jaw part are insulated from each other, and the seventh jaw part and the eighth jaw part may be respectively connected to different negative electrode ends of the power cable through corresponding vias. In this case, the first wire and the second wire may share a positive electrode through the first fastened clamping jaw, the third wire and the fourth wire may share a positive electrode through the second fastened clamping jaw, and the four wires are respectively connected to different negative electrode ends through each jaw part. Therefore, the four wires can be connected to different power supply loops to realize separate control of a power status of each wire.

Certainly, in some other implementations, the two fastened clamping jaws and the two movable clamping jaws may be respectively designed as two jaw parts that are insulated from each other. In this case, the two jaw parts connected to two ends of each wire are respectively connected to a positive electrode end and a negative electrode end of the power cable. This realizes separate control of a power status of each wire, and details are not described herein again.

As described above, the actuator 424 may drive the moving part 422 to move by using the four wires, and further drive the photosensitive chip 430 disposed on the moving part 422 to move, to implement an optical image stabilization function. The following describes a driving principle of the actuator 424 in detail.

When the first wire 4245 is energized, the first wire 4245 shrinks and deforms to generate a pull force in an x-axis negative direction on the first movable clamping jaw 4243, and the pull force can be transmitted from the second end 42432 of the first movable clamping jaw 4243 to the moving part 422, to drive the moving part 422 to move in the x-axis negative direction.

When the third wire 4247 is energized, the third wire 4247 shrinks and deforms to generate a pull force in an x-axis positive direction on the second movable clamping jaw 4244, and the pull force can be transmitted from the second end 42442 of the second movable clamping jaw 4244 to the moving part 422, to drive the moving part 422 to move in the x-axis positive direction.

In the foregoing two working modes, the actuator 424 may separately drive the photosensitive chip 430 to move in the x-axis positive and x-axis negative directions, so that an imaging position on a surface of the photosensitive chip 430 may be adjusted in the x-axis direction, to implement optical image stabilization in the x-axis direction.

When the second wire 4246 is energized, the second wire 4246 shrinks and deforms to generate a pull force in a y-axis negative direction on the second movable clamping jaw 4244, and the pull force can be transmitted from the second end 42442 of the second movable clamping jaw 4244 to the moving part 422, to drive the moving part 422 to move in the y-axis negative direction.

When the fourth wire 4248 is energized, the fourth wire 4248 shrinks and deforms to generate a pull force in a y-axis positive direction on the first movable clamping jaw 4243, and the pull force can be transmitted from the second end 42432 of the first movable clamping jaw 4243 to the moving part 422, to drive the moving part 422 to move in the y-axis positive direction.

In the foregoing two working modes, the actuator 424 may separately drive the photosensitive chip 430 to move in the y-axis positive and y-axis negative directions, so that an imaging position on a surface of the photosensitive chip 430 may be adjusted in the y-axis direction, to implement optical image stabilization in the y-axis direction.

When the first wire 4245 and the fourth wire 4248 are respectively energized, the first wire 4245 and the fourth wire 4248 shrink and deform, a resultant force direction of a pull force generated on the first movable clamping jaw 4243 is a diagonal direction pointing from a lower right corner of the module circuit board 420 to an upper left corner of the module circuit board 420, and the pull force can be transmitted to the moving part 422 by the first movable clamping jaw 4243, to drive the moving part 422 to move in a direction pointing from the lower right corner to the upper left corner.

When the second wire 4246 and the third wire 4247 are respectively energized, the second wire 4246 and the third wire 4247 shrink and deform, a resultant force direction of a pull force generated on the second movable clamping jaw 4244 is a diagonal direction pointing from the upper left corner of the module circuit board 420 to the lower right corner of the module circuit board 420, and the pull force can be transmitted to the moving part 422 by the second movable clamping jaw 4244, to drive the moving part 422 to move in a direction pointing from the upper left corner to the lower right corner. It should be noted that orientation terms such as "up", "down", "left", and "right" used in the module circuit board 420 in embodiments of this application are mainly described based on a display orientation of the module circuit board 420 in FIG. 8. An orientation of the module circuit board 420 in an actual application scenario is not limited.

In the foregoing two working modes, the actuator 424 may separately drive the photosensitive chip 430 to move in forward and reverse directions of a diagonal line of the module circuit board 420, so that an imaging position on a surface of the photosensitive chip 430 may be adjusted in the diagonal direction, to implement optical image stabilization in the direction.

When the first wire 4245 and the second wire 4246 are respectively energized, the first wire 4245 and the second wire 4246 shrink and deform. The first wire 4245 generates a pull force on the first movable clamping jaw 4243 in the x-axis negative direction. The second wire 4246 generates a pull force on the second movable clamping jaw 4244 in the y-axis negative direction. The pull forces on the first movable clamping jaw 4243 and the second movable clamping jaw 4244 can be transmitted to the moving part 422 from their respective second ends. A resultant force is formed on the moving part 422 in a diagonal direction pointing from an upper right corner of the module circuit board 420 to a lower left corner of the module circuit board 420, to drive the moving part 422 to move in a direction pointing from the upper right corner to the lower left corner.

When the third wire 4247 and the fourth wire 4248 are respectively energized, the third wire 4247 and the fourth wire 4248 shrink and deform. The third wire 4247 generates a pull force on the second movable clamping jaw 4244 in the x-axis positive direction. The fourth wire 4248 generates a pull force on the first movable clamping jaw 4243 in the y-axis positive direction. The pull forces on the first movable clamping jaw 4243 and the second movable clamping jaw 4244 can be transmitted to the moving part 422 from their respective second ends. A resultant force is formed on the moving part 422 in a diagonal direction pointing from the lower left corner of the module circuit board 420 to the upper right corner of the module circuit board 420, to drive the moving part 422 to move in a direction pointing from the lower left corner to the upper right corner.

In the foregoing two working modes, the actuator 424 may separately drive the photosensitive chip 430 to move in forward and reverse directions of another diagonal line of the module circuit board 420, so that an imaging position on a surface of the photosensitive chip 430 may be adjusted in the diagonal direction, to implement optical image stabilization in the direction.

When the first wire 4245 and the third wire 4247 are respectively energized, the first wire 4245 and the third wire 4247 shrink and deform. The first wire 4245 generates a pull force on the first movable clamping jaw 4243 in the x-axis negative direction. The third wire 4247 generates a pull force on the second movable clamping jaw 4244 in the x-axis positive direction. The pull forces on the first movable clamping jaw 4243 and the second movable clamping jaw 4244 can be transmitted to the moving part 422 from their respective second ends. A resultant force of the two pull forces can form a clockwise torque action on the moving part 422, to drive the moving part 422 to rotate clockwise.

When the second wire 4246 and the fourth wire 4248 are respectively energized, the second wire 4246 and the fourth wire 4248 shrink and deform. The second wire 4246 generates a pull force on the second movable clamping jaw 4244 in the y-axis negative direction. The fourth wire 4248 generates a pull force on the first movable clamping jaw 4243 in the y-axis positive direction. The pull forces on the first movable clamping jaw 4243 and the second movable clamping jaw 4244 can be transmitted to the moving part 422 from their respective second ends. A resultant force of the two pull forces can form a counterclockwise torque action on the moving part 422, to drive the moving part 422 to rotate counterclockwise.

In the foregoing two working modes, the actuator 424 may separately drive the photosensitive chip 430 to rotate clockwise or counterclockwise, to adjust an imaging position on a surface of the photosensitive chip 430. Optical image stabilization in an xy plane is implemented in a rotating motion form.

It can be learned from the above analysis that the corresponding wire of the actuator 424 is energized, so that the moving part 422 can realize various motion forms such as translation in the x-axis direction, translation in the y-axis direction, translation in the two diagonal directions, and rotation in the xy plane. In this way, an optical image stabilization function of the camera module is implemented. This driving manner can provide a large driving force, so that the camera module can implement a large image stabilization angle. In addition, the actuator has a small requirement for mounting space. According to design verification, a z direction height of the actuator in this embodiment is only about 0.85 mm. Compared with that in the conventional voice coil motor, the height of the actuator can be reduced by more than 0.3 mm.

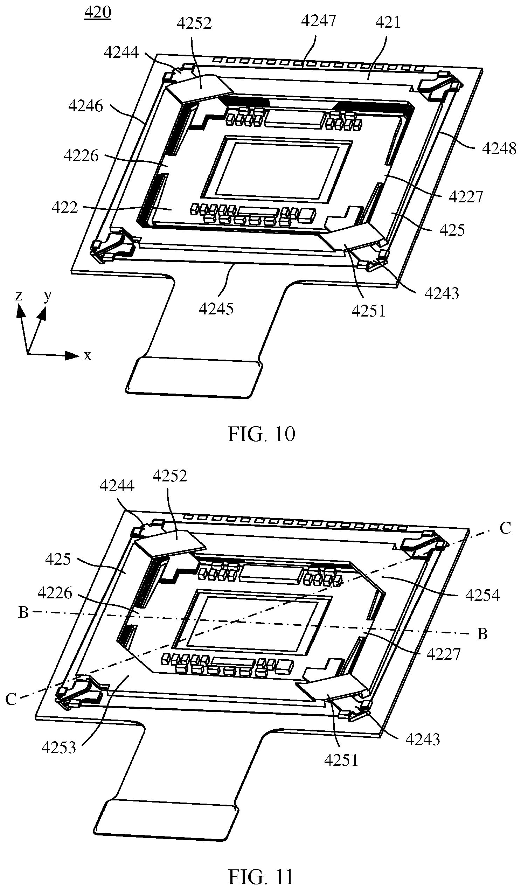

FIG. 10 is a schematic of a structure of another module circuit board according to an embodiment of this application. In this embodiment, the camera module may further include a shielding structure 425, and the shielding structure 425 may be disposed on a same side of the module circuit board 420 as the fastened clamping jaw and the movable clamping jaw. For example, in the embodiment shown in FIG. 9, the fastened clamping jaws and the movable clamping jaws are both located on a side that is of the module circuit board 420 and that faces the optical lens, and the four wires connected between the movable clamping jaws and the fastened clamping jaws are also located on the side that is of the module circuit board 420 and that faces the optical lens. In this case, the shielding structure 425 is also located on this side.

In some implementations, the shielding structure 425 may be fastened to the fastening part 421. The shielding structure 425 is annularly disposed, and during specific implementation, the shielding structure 425 may be located on an inner side of an annular structure formed by the four wires. In this way, the shielding structure 425 can shield each wire, to avoid a wire clamping problem caused by embedding of the wire into a gap between the fastening part 421 and the moving part 422. This improves working reliability of the actuator. For example, the shielding structure 425 may be specifically a Mylar film.

It should be noted that, a first arched part 4251 may be disposed at a position that is on the shielding structure 425 and that corresponds to the first movable clamping jaw 4243, and a second end of the first movable clamping jaw 4243 may extend above the moving part 422 through a gap between the first arched part 4251 and the fastening part 421. This implements connection with the moving part 422. Similarly, a second arched part 4252 may be disposed at a position that is on the shielding structure 425 and that corresponds to the second movable clamping jaw 4244, and a second end of the second movable clamping jaw 4244 may extend above the moving part 422 through a gap between the second arched part 4252 and the fastening part 421. This implements connection with the moving part 422. It should be understood that there may be a specific gap between the first movable clamping jaw 4243 and the first arched part 4251, to ensure movement space of the first movable clamping jaw 4243 in a z direction. Similarly, there may also be a specific gap between the second movable clamping jaw 4244 and the second arched part 4252, to ensure movement space of the second movable clamping jaw 4244 in the z direction.

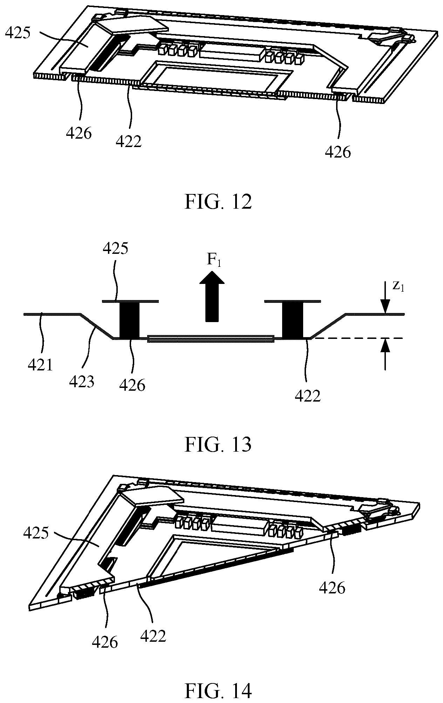

FIG. 11 is a schematic of a structure of another module circuit board according to an embodiment of this application. FIG. 12 is a schematic of a cross section of a structure of the module circuit board shown in FIG. 11 at B-B. As shown in FIG. 11 and FIG. 12, an inner side of the shielding structure 425 may further extend above the moving part 422, that is, the inner side of the shielding structure 425 and the moving part 422 may partially overlap. For example, the shielding structure 425 may partially overlap with the third protrusion 4226 and the fourth protrusion 4227 of the moving part 422. The shielding structure 425 is spaced from the moving part 422. For example, there may be a first gap between the shielding structure 425 and the moving part 422. In this case, the camera module may further include a first support pillar 426. The first support pillar 426 may be disposed between the shielding structure 425 and the moving part 422 in the z direction. One end of the first support pillar 426 is fastened to the shielding structure 425, and the other end is disposed in contact with the moving part 422.

FIG. 13 is a simplified schematic of the structure of the module circuit board shown in FIG. 11. As shown in FIG. 11 to FIG. 13, in a specific design, a height of the first support pillar 426 may be greater than of the first gap. In this way, a height of the moving part 422 in the z direction is smaller than that of the fastening part 421 in the z direction based on a supporting action of the first support pillar 426. Therefore, a vertical segment difference zi is generated between the moving part 422 and the fastening part 421, that is, deformation of the elastic part 423 in the z direction is zi. In this case, the elastic part 423 applies an upward pre-pressure F₁ to the moving part 422, and a magnitude of the pre-pressure F₁ is F₁=K_{z}*z₁, where K_{z} is an elastic coefficient of the elastic part 423 in the z direction. By using the pre-pressure F₁, the moving part 422 and an end of the first support pillar 426 can be kept in close contact, to reduce a risk of z direction displacement of the moving part 422, and overcome a problem of posture difference of the moving part.

There may be a plurality of first support pillars 426, for example, three, four, five, or more first support pillars. In addition to two first support pillars 426 disposed at the third protrusion 4226 and the fourth protrusion 4227 shown in FIG. 11, the first support pillar may also be disposed at another position of the moving part. FIG. 14 is a schematic of a cross section of a structure of the module circuit board shown in FIG. 11 at C-C. In this embodiment, an inner side of the shielding structure 425 may further include a first extension part 4253 and a second extension part 4254. The first extension part 4253 may extend above a corner part formed by a first side wall and a third side wall of the moving part 422. The second extension part 4254 may extend above a corner part formed by the third side wall and a fourth side wall of the moving part. During specific implementation, the first support pillars 426 may also be separately disposed between the first extension part 4253 and the moving part 422, and between the second extension part 4254 and the moving part 422. In this case, four first support pillars 426 may be disposed between the shielding structure 425 and the moving part 422, to form a stable support on sides of the moving part 422, and improve uniformity force exertion of the moving part 422.

In some other implementations, the first support pillar 426 may be further disposed between the foregoing support configured to support an optical filter and the moving part 422. In this case, one end of the first support pillar 426 may be fastened to the support, and the other end of the first support pillar 426 is disposed in contact with the moving part 422. In this way, the elastic part can be pre-pressed on the moving part 422, and a problem of posture difference of the moving part 422 can be overcome.

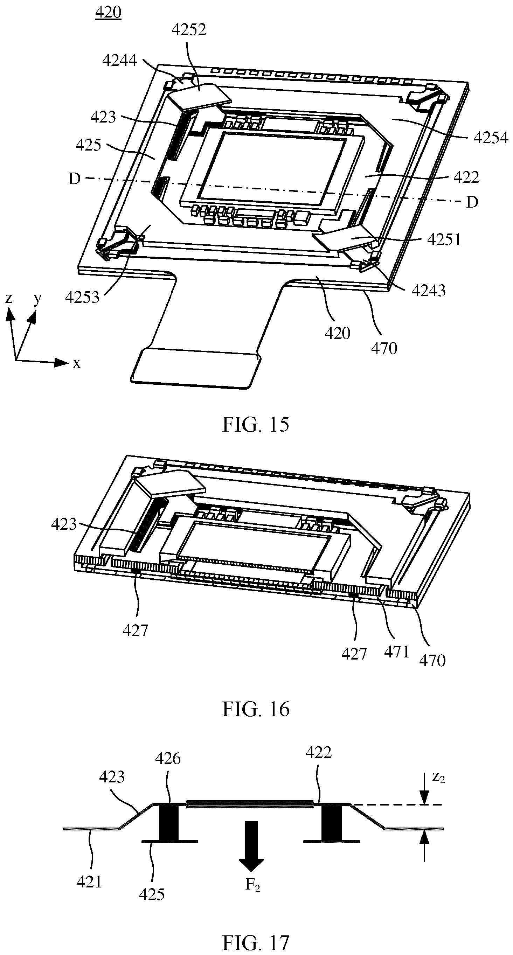

FIG. 15 is a schematic of a structure of another module circuit board according to an embodiment of this application. FIG. 16 is a schematic of a cross section of a structure of the module circuit board shown in FIG. 15 at D-D. To improve structural reliability of the module circuit board 420, the camera module may further include a bearing base plate 470. The bearing base plate 470 may be disposed on a side that is of the module circuit board 420 and that is away from the optical lens, to support and reinforce the module circuit board 420. During specific arrangement, a groove 471 may be disposed in a region in which the moving part 422 and the elastic part 423 of the module circuit board 420 correspond to the bearing base plate 470, so that the moving part 422 and the elastic part 423 are spaced apart from a bottom wall of the groove 471. This avoids frictional obstruction of the moving part 422 due to direct contact, to affect movement reliability of the moving part 422.

In some embodiments, the camera module may further include a second support pillar 427. The second support pillar 427 may be disposed between the bottom wall of the groove 471 and the moving part 422. One end of the second support pillar 427 is fastened to the bottom wall of the groove 471, and the other end is disposed in contact with the moving part 422.

FIG. 17 is a simplified schematic of the structure of the module circuit board shown in FIG. 15. As shown in FIG. 15 to FIG. 17, similar to that in the first support pillar, in a specific design, a height of the second support pillar 427 may be greater than spacing between the bottom wall of the groove 471 and the moving part 422. In this way, based on a supporting action of the second support pillar 427, a height of the moving part 422 in a z direction is greater than a height of the fastening part 421 in the z direction. Therefore, a vertical segment difference z2 is generated between the moving part 422 and the fastening part 421, that is, deformation of the elastic part 423 in the z direction is z₂. In this case, the elastic part 423 applies a downward pre-pressure F₂ to the moving part 422, and a magnitude of the pre-pressure F₂ is F₂=K_{z}*z₂. By using the pre-pressure F₂, the moving part 422 and an end of the second support pillar 427 can be kept in close contact, to reduce a risk of z direction displacement of the moving part 422, and overcome a problem of posture difference of the moving part. There may also be a plurality of second support pillars, for example, three, four, five, or more second support pillars. The plurality of support pillars may be evenly disposed between the bottom wall of the groove 471 and the moving part 422, to improve uniformity force exertion of the moving part 422.

It should be noted that in this embodiment, the second support pillar 427 supports the moving part 422 from below the moving part 422, and the first support pillar supports the moving part 422 from above the moving part 422. In the two schemes, directions of a pre-pressure of the elastic part on the moving part are opposite. In actual application, any one of the foregoing two pre-pressure solutions may be selected for implementation based on a specific design of the camera module. This is not limited in this application.

In addition, it is worth mentioning that in the scheme in which the elastic part 423 is pre-pressed on the moving part 422 upwards by using the first support pillar, when the moving part 422 is greatly impacted to cause downward displacement, the bottom wall of the groove 471 can limit the moving part 422. The elastic part 423 is not be damaged due to excessive vertical displacement of the moving part 422, and reliability of the elastic part 423 is improved. On the contrary, in the scheme in which the elastic part 423 is pre-pressed on the moving part 422 downwards by using the second support pillar 427, when the moving part 422 is greatly impacted to cause upward displacement, the first extension part 4253 and the second extension part 4254 of the shielding structure 425 may also limit the moving part 422, to improve reliability of the elastic part 423.

In some implementations, a side that is of the moving part 422 and that is away from the optical lens may be further connected to the bearing base plate 470 by using a damping glue, that is, connected to the bottom wall of the groove 471. In this way, when the moving part 422 moves or rotates, the damping glue deforms with movement of the moving part 422, to provide a damping force that quickly stabilizes the moving part 422. This ensures motion stability of the moving part 422. During specific arrangement, the damping glue may be evenly coated at a plurality of positions on the side that is of the moving part 422 and that is away from the optical lens, to improve uniformity force exertion of the moving part 422, to further improve motion stability of the moving part. For example, the damping glue may be an adhesive with better damping property like silica gel or rubber, and may be formed in the groove 471 and the moving part 422 through glue dispensing or glue spraying.

Certainly, in some other implementations, the elastic part 423 may also be connected to the bottom wall of the groove 471 by using the damping glue. In this case, a damping force of the damping glue may be applied to the elastic part 423 and transmitted to the moving part 422 through the elastic part 423. In this way, smooth movement of the moving part 422 can be ensured. For example, each elastic component of the elastic part 423 may be connected to the bottom wall of the groove 471 by using the damping glue, to improve uniformity force exertion of the moving part 422.

Alternatively, in some other implementations, the damping glue may be separately disposed between a first end of the first movable clamping jaw 4243 and the fastening part 421, and between a first end of the second movable clamping jaw 4244 and the fastening part 421. Therefore, the two movable clamping jaws are connected to the fastening part 421 by using the damping glue. In this case, a damping force of the damping glue may be transmitted to the moving part 422 through the first movable clamping jaw 4243 and the second movable clamping jaw 4244, so that the moving part 422 can move smoothly.

Alternatively, in some other embodiments, the damping glue may be separately disposed between the first movable clamping jaw 4243 and the first arched part 4251, and between the second movable clamping jaw 4244 and the second arched part 4252. Therefore, the two movable clamping jaws are connected to the shielding structure 425 by using the damping glue. Similar to that in the foregoing solution, in this case, a damping force of the damping glue may also be transmitted to the moving part 422 through the first movable clamping jaw 4243 and the second movable clamping jaw 4244, so that the moving part 422 can move smoothly.

It should be understood that all of the foregoing several disposing manners of the damping glue may be applied to a design of the camera module, or some of the disposing manners may be selectively applied. Specifically, the damping glue may be disposed based on a layout, a volume, a weight, and the like of a related structure of the module circuit board. This is not limited in this application.

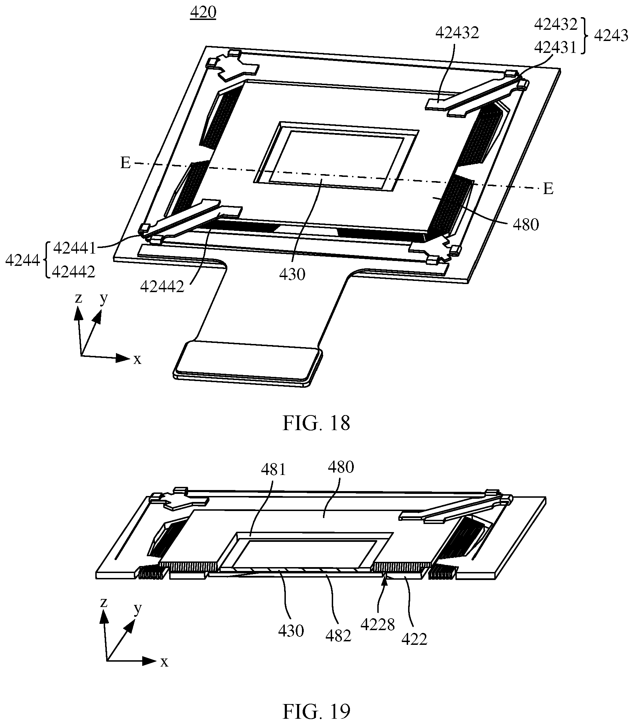

FIG. 18 is a schematic of a structure of another module circuit board according to an embodiment of this application. Different from a manner in which the photosensitive chip 430 is directly disposed on the module circuit board 420 in the foregoing embodiment, a manner in this embodiment is that the camera module may further include a chip bearing base plate 480, the photosensitive chip 430 may be mounted on the chip bearing base plate 480 in advance, and then the chip bearing base plate 480 on which the photosensitive chip 430 is mounted is soldered and fastened to the module circuit board 420.

For example, the photosensitive chip 430 may be electrically connected to the chip bearing base plate 480 through a wire bonding process. Certainly, the photosensitive chip 430 may also be mounted on the chip bearing base plate 480 through a chip on board technology, or may also be packaged on the chip bearing base plate 480 through a ball grid array technology or a land grid array technology.

FIG. 19 is a schematic of a cross section of a structure of the module circuit board shown in FIG. 18 at E-E. As shown in FIG. 18 and FIG. 19, a chip mounting groove 481 may be disposed on a part of the chip bearing base plate 480, and the photosensitive chip may be disposed in the chip mounting groove 481. In this way, the photosensitive chip 430 and the chip bearing base plate 480 may overlap in a region in a z-axis direction. This helps reduce a size of the camera module in the z-axis direction. In addition, a reinforcing plate 482 may be fastened to a side that is of the chip bearing base plate 480 and that is away from the optical lens. The reinforcing plate 482 may be disposed at the chip mounting groove 481 to support the photosensitive chip 430, so that the chip bearing base plate 480 and the photosensitive chip 430 are relatively fastened. This improves structural reliability of the camera module. For example, the reinforcing plate 482 may be a steel plate.

In this embodiment, the chip bearing base plate 480 may be specifically disposed on the moving part 422 of the module circuit board 420, and an avoidance groove 4228 may be disposed in a region corresponding to the reinforcing plate 482 on the moving part 422. In this way, after the chip bearing base plate 480 and the module circuit board 420 are assembled, the reinforcing plate 482 may be accommodated in the avoidance groove 4228. This helps further reduce a size of the camera module in the z-axis direction.

In addition, because the chip bearing base plate 480 covers the moving part 422, to implement a connection between the moving part 422 and the actuator, specifically, the second end 42432 of the first movable clamping jaw 4243 and the second end 42442 of the second movable clamping jaw 4244 may be separately fastened to the chip bearing base plate 480 when the actuator is disposed. Based on a fastened connection relationship between the chip bearing base plate 480 and the moving part 422, the chip bearing base plate 480 and the moving part 422 may be driven by the actuator as entirety, to adjust a position of the photosensitive chip 430.

In conclusion, according to the camera module provided in embodiments of this application, the actuator of the camera module drives, based on a length change of the wire, the moving part to move, and further drives the photosensitive chip to move to implement an image stabilization function. Compared with that in a conventional solution of a voice coil motor, on a premise that the camera module can implement image stabilization at a large angle, a stacking height of the camera module in a z direction can be effectively reduced, so that space occupied by the camera module inside the electronic device can be reduced. In addition, because there is no magnetic component like a magnet in the actuator, magnetic interference to another component inside an electronic device can be avoided, and use reliability of the electronic device can be improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising an optical lens, a module circuit board, a photosensitive chip, and an actuator, wherein
the module circuit board is disposed on a light exit side of the optical lens, and comprises a fastening part, a moving part, and an elastic part, wherein the moving part is elastically connected to the fastening part through the elastic part;
the photosensitive chip is disposed on a side that is of the moving part and that faces the optical lens; and
the actuator comprises a fastened clamping jaw, a movable clamping jaw, and a wire, the fastened clamping jaw is fastened to the fastening part, the movable clamping jaw is fastened to the moving part, the wire is connected between the fastened clamping jaw and the movable clamping jaw, a length of the wire is changeable, and the actuator is configured to drive the moving part to move relative to the fastening part when the length of the wire changes.

2. The camera module according to claim 1, wherein the elastic part has electrical conductivity.

3. The camera module according to claim 1 or 2, wherein the fastening part, the moving part, and the elastic part have a same laminated structure.

4. The camera module according to claim 3, wherein the fastening part, the moving part, and the elastic part are an integrated structure formed through cutting.

5. The camera module according to any one of claims 1 to 4, wherein the camera module further comprises a flexible printed circuit board, a connector is disposed on the flexible printed circuit board, and the flexible printed circuit board and the module circuit board are a rigid-flex printed circuit board of an integrated structure.

6. The camera module according to any one of claims 1 to 5, wherein the fastening part is of a frame-shaped structure, the moving part is disposed on an inner side of the fastening part, the elastic part is disposed in a gap between the fastening part and the moving part, and the elastic part is annularly disposed around the moving part.

7. The camera module according to claim 6, wherein the fastening part has a first protrusion and a second protrusion that are disposed toward the moving part, the moving part has a third protrusion and a fourth protrusion that are disposed toward the fastening part, and the first protrusion, the third protrusion, the second protrusion, and the fourth protrusion are sequentially arranged in a peripheral direction of the moving part; and
the elastic part comprises four groups of elastic components, and the four groups of elastic components are respectively connected between the first protrusion and the third protrusion, between the third protrusion and the second protrusion, between the second protrusion and the fourth protrusion, and between the fourth protrusion and the first protrusion.

8. The camera module according to claim 7, wherein the elastic components each comprise at least one elastic arm, and the at least one elastic arm is disposed in parallel and at an interval.

9. The camera module according to claim 8, wherein the elastic arm comprises a substrate and at least one layer of subboard disposed on the substrate, the substrate is made of a rigid material, and a conductive line is disposed on the subboard.

10. The camera module according to any one of claims 6 to 9, wherein there are two fastened clamping jaws and two movable clamping jaws: a first fastened clamping jaw, a second fastened clamping jaw, a first movable clamping jaw, and a second movable clamping jaw; the first fastened clamping jaw, the first movable clamping jaw, the second fastened clamping jaw, and the second movable clamping jaw are sequentially arranged in the peripheral direction of the moving part; and
there are four wires: a first wire, a second wire, a third wire, and a fourth wire, two ends of the first wire are respectively connected to the first fastened clamping jaw and the first movable clamping jaw, two ends of the second wire are respectively connected to the first fastened clamping jaw and the second movable clamping jaw, two ends of the third wire are respectively connected to the second fastened clamping jaw and the second movable clamping jaw, and two ends of the fourth wire are respectively connected to the second fastened clamping jaw and the first movable clamping jaw.

11. The camera module according to claim 10, wherein the first fastened clamping jaw comprises a first jaw part and a second jaw part, the first jaw part is insulated from the second jaw part, the first jaw part is configured to connect to the first wire, and the second jaw part is configured to connect to the second wire; and
the second fastened clamping jaw comprises a third jaw part and a fourth jaw part, the third jaw part is insulated from the fourth jaw part, the third jaw part is configured to connect to the third wire, and the fourth jaw part is configured to connect to the fourth wire.

12. The camera module according to claim 10 or 11, wherein the first movable clamping jaw comprises a fifth jaw part and a sixth jaw part, the fifth jaw part is insulated from the sixth jaw part, the fifth jaw part is configured to connect to the first wire, and the sixth jaw part is configured to connect to the fourth wire; and
the second movable clamping jaw comprises a seventh jaw part and an eighth jaw part, the seventh jaw part is insulated from the eighth jaw part, the seventh jaw part is configured to connect to the second wire, and the eighth jaw part is configured to connect to the third wire.

13. The camera module according to any one of claims 10 to 12, wherein the first movable clamping jaw and the second movable clamping jaw each are of a strip structure, an orthographic projection of a first end of the first movable clamping jaw on the module circuit board falls on the fastening part, the first end of the first movable clamping jaw is configured to connect to the first wire and the fourth wire, and a second end of the first movable clamping jaw is fastened to the moving part; and
an orthographic projection of a first end of the second movable clamping jaw on the module circuit board falls on the fastening part, the first end of the second movable clamping jaw is configured to connect to the second wire and the third wire, and a second end of the second movable clamping jaw is fastened to the moving part.

14. The camera module according to claim 13, wherein the fastening part is provided with a first hole, a second hole, a third hole, and a fourth hole;
the first hole is disposed close to the first fastened clamping jaw, and at least a part of an orthographic projection that is of an extension line of an end at which the first wire and the second wire are connected to the first fastened clamping jaw and that is on the module circuit board falls on the first hole;
the second hole is disposed close to the second fastened clamping jaw, and at least a part of an orthographic projection that is of an extension line of an end at which the third wire and the fourth wire are connected to the second fastened clamping jaw and that is on the module circuit board falls on the second hole;
the third hole is disposed close to the first movable clamping jaw, and at least a part of an orthographic projection that is of an extension line of an end at which the first wire and the fourth wire are connected to the first movable clamping jaw and that is on the module circuit board falls on the third hole; and
the fourth hole is disposed close to the second movable clamping jaw, and at least a part of an orthographic projection that is of an extension line of an end at which the second wire and the third wire are connected to the second movable clamping jaw and that is on the module circuit board falls on the fourth hole.

15. The camera module according to claim 13 or 14, wherein the first end of the first movable clamping jaw is connected to the fastening part by using a damping glue, and the first end of the second movable clamping jaw is connected to the fastening part by using a damping glue.

16. The camera module according to any one of claims 10 to 15, wherein the first wire and the third wire separately extend in a first direction, the second wire and the fourth wire separately extend in a second direction, and the first direction and the second direction are set at an included angle.

17. The camera module according to any one of claims 10 to 16, wherein an annular shielding structure is disposed on the fastening part, the shielding structure and the wires are located on a same side of the fastening part, and the shielding structure is located on an inner side of an annular region enclosed by the four wires.

18. The camera module according to claim 17, wherein an inner side of the shielding structure partially overlaps with the moving part, and a first gap exists between the shielding structure and the moving part in a thickness direction of the module circuit board; and
the camera module further comprises a first support pillar disposed between the shielding structure and the moving part, one end of the first support pillar is fastened to the shielding structure, the other end is disposed in contact with the moving part, and a height of the first support pillar is greater than the first gap.

19. The camera module according to claim 17 or 18, wherein a first arched part is disposed at a position that is on the shielding structure and that corresponds to the first movable clamping jaw, and the first movable clamping jaw passes between the first arched part and the fastening part; and
a second arched part is disposed at the position that is on the shielding structure and that corresponds to the first movable clamping jaw, and the second movable clamping jaw passes between the second arched part and the fastening part.

20. The camera module according to claim 19, wherein there is a gap between the first movable clamping jaw and the first arched part, and the first movable clamping jaw is connected to the first arched part by using a damping glue; and
there is a gap between the second movable clamping jaw and the second arched part, and the second movable clamping jaw is connected to the second arched part by using a damping glue.

21. The camera module according to any one of claims 1 to 20, wherein the camera module further comprises a bearing base plate, and the bearing base plate is disposed on a side that is of the module circuit board and that faces away from the optical lens; and a groove is disposed in a region in which the bearing base plate is opposite to the moving part and the elastic part.

22. The camera module according to claim 21, wherein a side that is of the moving part and that is away from the optical lens is connected to a bottom wall of the groove by using a damping glue.

23. The camera module according to claim 21 or 22, wherein the camera module further comprises a second support pillar, the second support pillar is disposed between the moving part and the bottom wall of the groove, one end of the second support pillar is fastened to the bottom wall of the groove, the other end is disposed in contact with the moving part, and a height of the second support pillar is greater than a gap between the moving part and the bottom wall of the groove.

24. The camera module according to any one of claims 1 to 23, wherein the module circuit board is provided with a power supply loop; and
the wire is a shape memory alloy wire, and the wire is electrically connected to the power supply loop.

25. The camera module according to any one of claims 1 to 24, wherein the camera module further comprises a chip bearing base plate, the photosensitive chip is disposed on the chip bearing base plate, and the chip bearing base plate is fastened to the moving part.

26. The camera module according to any one of claims 1 to 25, wherein the camera module further comprises a reflection component, and the reflection component is disposed on a light entry side of the optical lens, and is configured to divert ambient light and emit the ambient light onto the light entry side of the optical lens.

27. An electronic device, comprising a housing and the camera module according to any one of claims 1 to 26, wherein the camera module is disposed in the housing.
